# EUROPEAN PATENT APPLICATION

(11) **EP 4 228 223 A1**
(43) Date of publication of application: **16.08.2023**
(21) Application number: 22156079.0
(22) Date of filing: 10.02.2022
(51) Int. Cl.: H04L 65/1016, H04L 65/1073, H04L 65/1046

(54) **COMMUNICATION CONTROL MECHANISM WITH CLOUD BASED CALL STATE CONTROL FUNCTION**

(71) Applicant: Nokia Technologies Oy, 02610 Espoo (FI)
(72) Inventor: MILINSKI, Alexander, 81373 Munich (DE); PAUL, Sumana, 560037 Bangalore (IN); BALASUBRAMANIAM, Sankaran, 560075 Bangalore (IN)
(74) Representative: Nokia EPO representatives

(57) **Abstract**

An apparatus for use by a communication network control element or communication network control function using at least two Internet Protocol, IP, addresses, the apparatus comprising at least one processing circuitry, and at least one memory for storing instructions to be executed by the processing circuitry, wherein the at least one memory and the instructions are configured to, with the at least one processing circuitry, cause the apparatus at least: to receive a register message from a communication element or communication function via a communication using a first IP address of the communication network control element or communication network control function, to process the register message for determining whether the communication element or communication function is configured for a stand-by configuration in which at least two IP addresses of the communication network control element or communication network control function are usable for a communication connection with the communication element or communication function, in case the determination is affirmative, to send to the communication element or communication function an indication of a second IP address of the communication network control element or communication network control function, the second IP address being different to the first IP address, and to establish a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

## Description

### BACKGROUND

### Field

Examples of embodiments relate to apparatuses, methods, systems, computer programs, computer program products and (non-transitory) computer-readable media usable for controlling a communication with a cloud based communication network control element or communication network control function, such as a call state control function of an IP multimedia subsystem. Specifically, examples of embodiments relate to apparatuses, methods, systems, computer programs, computer program products and (non-transitory) computer-readable media usable for enabling a robust communication when a call state control function of an IP multimedia subsystem, such as a P-CSCF, is deployed in a cloud environment across a plurality of sites using different IP addresses.

### Background Art

The following description of background art may include insights, discoveries, understandings or disclosures, or associations, together with disclosures not known to the relevant prior art, to at least some examples of embodiments of the present disclosure but provided by the disclosure. Some of such contributions of the disclosure may be specifically pointed out below, whereas other of such contributions of the disclosure will be apparent from the related context.

The following meanings for the abbreviations used in this specification apply:
- 3GPP: 3^{rd} Generation Partnership Project
- 4G: fourth generation
- 5G: fifth generation
- 5GS: 5G system
- AF: application function
- ARP: address resolution protocol
- AZ: availability zone
- BFD: bidirectional forwarding detection
- CPU: central processing unit
- CSCF: call state control function
- D: dispatcher
- DB: data bank
- DC: data center
- eNB: E-UTRAN Node B
- FQDN: fully qualified domain name
- gNB: next generation node B
- HSS: home subscriber server
- I-CSCF: interrogating CSCF
- ID: identification
- IP: Internet protocol
- LTE: Long Term Evolution
- LTE-A: LTE Advanced
- µs: micro service
- NF: network function
- NW: network, network side
- OSPF: open shortcut path first
- P-CSCF: proxy CSCF
- PSL: P-CSCF service logic
- S-CSCF: serving CSCF
- SA: security association
- SIP: session initiation protocol
- SPI: security parameter index
- UE: user equipment

### SUMMARY

According to an example of an embodiment, there is provided, for example, an apparatus for use by a communication network control element or communication network control function using at least two Internet Protocol, IP, addresses, the apparatus comprising at least one processing circuitry, and at least one memory for storing instructions to be executed by the processing circuitry, wherein the at least one memory and the instructions are configured to, with the at least one processing circuitry, cause the apparatus at least: to receive a register message from a communication element or communication function via a communication using a first IP address of the communication network control element or communication network control function,to process the register message for determining whether the communication element or communication function is configured for a stand-by configuration in which at least two IP addresses of the communication network control element or communication network control function are usable for a communication connection with the communication element or communication function, in case the determination is affirmative, to send to the communication element or communication function an indication of a second IP address of the communication network control element or communication network control function, the second IP address being different to the first IP address, and to establish a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

Furthermore, according to an example of an embodiment, there is provided, for example, a method for use in a communication network control element or communication network control function using at least two Internet Protocol, IP, addresses, the method comprising receiving a register message from a communication element or communication function via a communication using a first IP address of the communication network control element or communication network control function, processing the register message for determining whether the communication element or communication function is configured for a stand-by configuration in which at least two IP addresses of the communication network control element or communication network control function are usable for a communication connection with the communication element or communication function, in case the determination is affirmative, sending to the communication element or communication function, an indication of a second IP address of the communication network control element or communication network control function, the second IP address being different to the first IP address, and establishing a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

According to further refinements, these examples may include one or more of the following features:
- as part of the stand-by configuration, a security setup procedure may be conducted by establishing a security association for each of the first and second logical associations, wherein the security associations for the first logical association and the second logical association may include at least one of a first setting comprising using the same port numbers for sender ports of the security association for the first logical association and the security association for the second logical association, and using the same port numbers for receiver ports of the security association for the first logical association and the security association for the second logical association, a second setting comprising using different port numbers for sender ports of the security association for the first logical association and the security association for the second logical association, and using different port numbers for receiver ports of the security association for the first logical association and the security association for the second logical association, a third setting comprising using the same security parameter index values for the security association for the first logical association and the security association for the second logical association, and a fourth setting comprising using different security parameter index values for the security association for the first logical association and the security association for the second logical association, wherein the security associations for the first logical association and the second logical association further may include to use the same encryption parameters and keys for the security association for the first logical association and the security association for the second logical association;
- information regarding at least one of the first to fourth setting used for the security associations for the first logical association and the second logical association may be sent to the communication element or communication function; and information regarding a setting used for the security associations for the first logical association and the second logical association in the communication element or communication function may be received;
- the indication of the second IP address of the communication network control element or communication network control function may be sent to the communication element or communication function in an authentication challenge message or in an authentication confirmation message;
- information may be received or sent from or to the communication element or communication function by using the first logical association or the second logical association, wherein information received from the communication element or communication function via the first logical association and the second logical association may be processed, or information received from the communication element or communication function via the logical association considered as the active association may be processed and information received from the communication element or communication function via the logical association considered as the stand-by association may be rejected;
- it may be determined whether a communication connection using one of the first and second logical associations becomes unavailable, and in case the determination is affirmative, the communication connection using the other of the first and second logical associations may be used as the active association;
- it may be determined whether the communication connection determined to be unavailable becomes available again, and in case the determination is affirmative, the communication connection being available again as the active association may be used again;
- in case the determination whether the communication element or communication function is configured for the stand-by configuration is negative, a logical association between the first IP address of the communication network control element or communication network control function and the IP address of the communication element or communication function may be established, it may be determined whether a communication connection using the logical association becomes unavailable, and in case the determination is affirmative, an error code may be sent to a serving network node or a serving network function indicating that a restoration procedure for the communication network control element or communication network control function is to be conducted.

According to an example of an embodiment, there is provided, for example, an apparatus for use by a communication element or communication function configured for a stand-by configuration in which at least two Internet protocol, IP, addresses of a communication network control element or communication network control function are usable for a communication connection with the communication element or communication function, the apparatus comprising at least one processing circuitry, and at least one memory for storing instructions to be executed by the processing circuitry, wherein the at least one memory and the instructions are configured to, with the at least one processing circuitry, cause the apparatus at least: to send a register message to a communication network control element or communication network control function via a communication using a first IP address of the communication network control element or communication network control function, the register message comprising an indication that the communication element or communication function is configured for the stand-by configuration, to receive, from the communication network control element or communication network control function, an indication of a second IP address of the communication network control element or communication network control function, the second IP address being different to the first IP address, to store the second IP address, and to establish a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

Furthermore, according to an example of an embodiment, there is provided, for example, a method for use in a communication element or communication function configured for a stand-by configuration in which at least two Internet protocol, IP, addresses of a communication network control element or communication network control function are usable for a communication connection with the communication element or communication function, the method comprising sending a register message to a communication network control element or communication network control function via a communication using a first IP address of the communication network control element or communication network control function, the register message comprising an indication that the communication element or communication function is configured for the stand-by configuration, receiving, from the communication network control element or communication network control function, an indication of a second IP address of the communication network control element or communication network control function, the second IP address being different to the first IP address, storing the second IP address, and establishing a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

According to further refinements, these examples may include one or more of the following features:
- as part of the stand-by configuration, a security setup procedure may be conducted by establishing a security association for each of the first and second logical associations, wherein the security associations for the first logical association and the second logical association may include at least one of a fifth setting comprising using the same port numbers for sender ports of the security association for the first logical association and the security association for the second logical association, and using the same port numbers for receiver ports of the security association for the first logical association and the security association for the second logical association, and a sixth setting comprising using different port numbers for sender ports of the security association for the first logical association and the security association for the second logical association, and using different port numbers for receiver ports of the security association for the first logical association and the security association for the second logical association, wherein the security associations for the first logical association and the second logical association further may include to use different security parameter index values for the security association for the first logical association and the security association for the second logical association, and the same encryption parameters and keys for the security association for the first logical association and the security association for the second logical association;
- information regarding at least one of the fifth or sixth setting used for the security associations for the first logical association and the second logical association may be sent to the communication network control element or communication network control function; information regarding the security parameter index values for the security association for the first logical association and the security association for the second logical association may be sent to the communication network control element or communication network control function; and information regarding a setting used for the security associations for the first logical association and the second logical association in the communication network control element or communication network control function may be received;
- the indication of the second IP address of the communication network control element or communication network control function may be received from the communication network control element or communication network control function in an authentication challenge message or in an authentication confirmation message;
- information may be received or sent from or to the communication network control element or communication network control function by using the first logical association or the second logical association, and information received from the communication network control element or communication network control function via the first logical association and the second logical association may be processed;
- information may be received or sent from or to the communication network control element or communication network control function by using the logical association considered to be the active logical association, and in case information is received from the communication network control element or communication network control function by using the logical association considered to be the stand-by logical association, the logical association considered so far as being the stand-by logical association may be switched to the logical association considered to be the active logical association;
- information may be received or sent from or to the communication network control element or communication network control function by using the logical association considered to be the active logical association, and in case it is determined that a communication using the logical association considered to be the active logical association is not successful, the logical association considered so far as being the stand-by logical association may be switched to the logical association considered to be the active logical association and -try the communication may be re-tried by using the logical association considered after the switching as being the active logical association;
- it may be determined whether a communication connection using one of the first and second logical associations becomes unavailable, and in case the determination is affirmative, the communication connection using the other of the first and second logical associations may be used as the active association.

In addition, according to embodiments, there is provided, for example, a computer program product for a computer, including software code portions for performing the steps of the above defined methods, when said product is run on the computer. The computer program product may include a computer-readable medium on which said software code portions are stored. Furthermore, the computer program product may be directly loadable into the internal memory of the computer and/or transmittable via a network by means of at least one of upload, download and push procedures.

### BRIEF DESCRIPTION OF THE DRAWINGS

Some embodiments of the present disclosure are described below, by way of example only, with reference to the accompanying drawings, in which:
Fig. 1 shows a diagram illustrating an example of a cloud deployment pattern of a network function in which examples of embodiments are implementable;
Fig. 2 shows a diagram illustrating an example of associations between a UE and a P-CSCF;
Fig. 3 shows a signaling diagram of a SIP message exchange;
Fig. 4 shows a signaling diagram illustrating an example of a communication control procedure according to examples of embodiments of the invention;
Fig. 5 shows a signaling diagram illustrating an example of a communication control procedure according to examples of embodiments of the invention;
Fig. 6 shows a signaling diagram illustrating an example of a communication control procedure according to examples of embodiments of the invention;
Fig. 7 shows a signaling diagram illustrating an example of a communication control procedure according to examples of embodiments of the invention;
Fig. 8 shows a flow chart of a processing conducted in a communication network control element or communication network control function according to some examples of embodiments;
Fig. 9 shows a flow chart of a processing conducted in a communication element or communication function according to some examples of embodiments;
Fig. 10 shows a diagram of a communication network control element or communication network control function according to some examples of embodiments; and
Fig. 11 shows a diagram of a communication element or communication function according to some examples of embodiments.

### DESCRIPTION OF EMBODIMENTS

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

IP Multimedia Subsystem (IMS) is an architectural framework standardized by 3GPP for delivering IP multimedia services. IMS provides methods of delivering voice (VoIP) or other multimedia services in a standardized manner.

IMS uses IETF protocols wherever possible, e.g., the Session Initiation Protocol (SIP). According to the 3GPP, IMS shall aid the access of multimedia and voice applications from wireless and wireline terminals. For this, a horizontal control layer is provided that isolates the access network from the service layer.

Generally, IMS is a collection of different functions, linked by standardized interfaces. A user can connect to IMS in various ways, most of which use the standard IP. IMS terminals (such as mobile phones, personal digital assistants (PDAs) and computers) can register directly on IMS, even when they are roaming in another network or country (the visited network). The only requirement is that they can use IP and run SIP user agents. Also fixed access (e.g., digital subscriber line (DSL), cable modems, Ethernet, etc.), mobile access (e.g. 5G NR, LTE, etc.) and wireless access (e.g., WLAN, WiMAX) are supported.

In a core network subsystem, IMS uses several elements or function. For example, a HSS represents a master user database that supports the IMS network entities that actually handle calls. It comprises subscription-related information (subscriber profiles), performs authentication and authorization of the user, and provides information about the subscriber's location and IP information.

Call Session Control Function (CSCF) fulfill different roles of SIP servers or proxies, and are used to process SIP signaling packets in the IMS.

A Proxy-CSCF (P-CSCF) is a SIP proxy that is the first point of contact for the IMS terminal. The P-CSCF is used as a user-network interface which protects the network and the IMS terminal. The P-CSCF is assigned to an IMS terminal before registration, and does not change for the duration of the registration. It is located in the path of all signaling, and can inspect every signal. It provides subscriber authentication and may establish an IPsec or other security association with the IMS terminal for preventing attacks and for protecting the privacy of the subscriber. Also other functions are part of the P-CSCF, such as signal inspection, compression/decompression of messages, policy decision and control for authorizing media plane resources e.g., quality of service (QoS) over the media plane.

A Serving-CSCF (S-CSCF) is the central node of the signaling plane. It is a SIP server, but performs also session control. The S-CSCF downloads user profiles and upload user-to-S-CSCF associations (the user profile is only cached locally for processing reasons and is not changed) from and to the HSS. All necessary subscriber profile information is loaded from the HSS. The S-CSCF handles SIP registrations, which allows it to bind the user location (e.g., the IP address of the terminal) and the SIP address. It is located on the path of all signaling messages of the locally registered users, and can inspect every message. Furthermore, the S-CSCF decides to which application server(s) a SIP message is forwarded, it provides routing services, and enforces the policy of the network operator.

An Interrogating-CSCF (I-CSCF) is another SIP function. Remote servers can use it as a forwarding point (e.g., registering) for SIP packets. It queries the HSS to retrieve the address of a S-CSCF and assign it to a user performing SIP registration. Furthermore, it forwards SIP request or response to the S-CSCF

A new approach for increasing performance of communication networks is to use network virtualization. Network virtualization refers to abstracting network resources that were traditionally delivered in hardware to software. Network virtualization combines multiple physical networks to one virtual, software-based network, or it can divide one physical network into separate, independent virtual networks.

By means of network virtualization, network services can be decoupled from the underlying hardware and allows virtual provisioning of an entire network. It allows for creating, providing and managing networks in software, while continuing to leverage the underlying physical network as the packet-forwarding backplane. Physical network resources, such as switching, routing, firewalling, load balancing, and the like can be delivered in software, and require only IP packet forwarding from the underlying physical network.

Network and security services in software are distributed to a virtual layer (hypervisors, in a data center) and attached to individual workloads, such as a virtual machine or container, in accordance with networking and security policies defined for each connected application. When a workload is moved to another host, network services and security policies move with it.

However, when moving communication network functions into a virtual environment, such as in a computer cloud environment by using network virtualization, there are also some issues to be considered, in particular with regard to the availability or robustness of communication network control elements or functions.

For example, when considering IMS, an essential feature is the availability of P-CSCF which has to reach the user, in particular for terminating calls. However, due to the nature of the cloud, when IMS elements/functions are deployed to the cloud, and in particular to public cloud (with hyper scalers), robustness of the P-CSCF must be reconsidered.

In the following, different exemplifying embodiments will be described for illustrating a processing for controlling a communication with a cloud based communication network control element or communication network control function, such as a call state control function of an IMS. For this, as an example of a communication network to which examples of embodiments may be applied, a communication network architecture based on 3GPP standards for a communication network, such as IMS using 5G, is used, without restricting the embodiments to such an architecture, however. It is obvious for a person skilled in the art that the embodiments may also be applied to other kinds of communication networks, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but principles of the disclosure can be extended and applied to any other type of communication network, such as a wired communication networks as well.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules etc. that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit, which controls a respective coverage area or cell(s) and with which one or more communication stations such as communication elements, user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet, as well as with individual devices or groups of devices being not considered as a part of a network, such as monitoring devices like cameras, sensors, arrays of sensors, and the like. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element or network functions, such as a UE, an I-CSCF, an S-CSCF, a P-CSCF, or other network elements or network functions, as described herein, and any other elements, functions or applications may be implemented by software, e.g. by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

For illustrative purposes, a cloud deployment pattern for a core network function, such as a P-CSCF of an IMS, is described in which examples of embodiments can be implemented. Specifically, in the following, various processing examples are described in which a communication control is conducted by a communication network control element or function which is deployed at a plurality of sites.

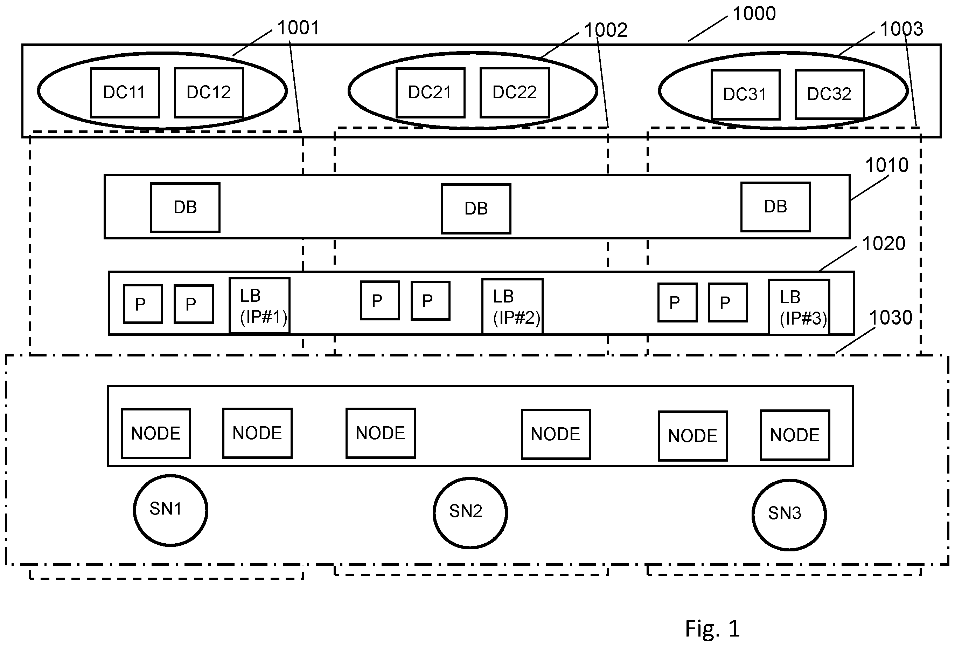

It is to be noted that the illustration in Fig. 1 mainly shows those parts of a cloud deployment network which are useful for understanding principles of embodiments of the disclosure, while other elements and interfaces are omitted in the illustration.

Reference number 1000 denotes a so-called region, and reference signs 1001, 1002 and 1003 denote so-called availability zones (AZ). AZs are isolated locations within data center regions from which public cloud services originate and operate. A region is a geographic location in which public cloud service providers' data centers (in the example in Fig. 1, DC11, DC12 in AZ1 1001, DC21, DC22 in AZ2 1002, and DC31, DC32 in AZ3 1003) reside. For example, an availability zone is selected by a user for its services depending on the needs of the user, such as compliance and proximity to end customers.

It is to be noted that services can also be provided across multiple AZs, e.g. for protecting resources.

Reference sign 1010 denotes a state databank service comprising several DBs. As illustrated in Fig. 1, the state databank service 1010 is deployed in a plurality of AZ. For example, the database service 1010 keeps relevant registration data.

Reference sign 1020 denotes a (single) core network function (such as a P-CSCF) which is spread across a plurality of AZs for resiliency reason. In each AZ (i.e. site), a different IP address is used (i.e. IP#1, IP#2, IP#3). That is, the parts located in the different AZ form together a single core network element/function, such as a P-CSCF.

Reference sign 1030 denote a virtual private cloud (VPC) in which several K8s clusters including a plurality of nodes are provided. Furthermore, several subnets (SN) are provided. A plurality of K8s clusters and subnets can be provided per VPC.

However, as indicated above, when instantiating a communication network control element or communication network control function, such as a P-CSCF, in a cloud environment such as shown in Fig. 1, there are further points to be considered. For example, in the IMS architecture, the availability of a P-CSCF function is equal to the availability of an IP address of the P-CSCF (server). However, with cloud-native paradigms, it is possible to deploy an application, e.g. a P-CSCF NF, across multiple sites, e.g. availability zones within a region, as illustrated in Fig. 1. In this case, different IP addresses are used on the various sites (i.e. IP#1, IP#2, IP#3). This implies that availability of the P-CSCF no longer equals the availability of the particular IP address.

However, in current IMS standards, and thus in the UE behavior, such a configuration is not considered.

That is, in the current 3GPP architecture, a UE registration is coupled to the IP address of a P-CSCF, not to the P-CSCF NF (e.g. FQDN). This is not in accordance with cloud-native principles. In other words, concepts like redundancy within an availability zone as used in the cloud environment is not considered in the control procedures established for the IMS. On the other hand, concepts like highly available IP addresses, on which the IMS configuration is based, are difficult to replicate in a public cloud environment.

Consequently, in order to ensure that a deployment of a communication network control element or function in a cloud environment across several sites, which leads to a presence of a plurality of IP addresses for the same a communication network control element or function, is in compliance with the requirements for the corresponding communication network control element or function in the telecommunication operation, a failover between IP addresses of the communication network control element or function, e.g. of the P-CSCF is required. For example, the necessity for a switch between P-CSCF IP addresses, for example in case of issues with a proxy or due to other reasons, such as connection failure, should not require a new IMS registration.

Currently, in order to deal with such a situation, it is conceivable to employ application level solutions for P-CSCF redundancy as defined in 3GPP (see e.g. 3GPP TS 23.380). However, this solution would require to fallback to a different P-CSCF server, which means a new IMS registration procedure.

Another approach would be to move an IP address across sites and data centres. However, this is difficult to achieve. Typically, router-based protocols (such as BFD, OSPF) or gratuitous ARP are used as a basis of an IP movement solution across data centres. However, these types of solution do not work for public cloud in most situations, where IP address belongs to the IP infrastructure of the data centre and cannot be moved elsewhere. In addition, public cloud introduces possibility of expanding applications in web-scale mode across multiple physical datacentres (i.e. availability zones), but it does not provide flexibility to move application IP addresses across these availability zones.

According to examples of embodiments, a control scheme is proposed in which a communication element or communication function, such as a UE, is made aware of (at least) two IP addresses of same communication network control element or function deployed in the cloud across various sites, such as for example the P-CSCF as described above. The IP addresses are the one which is used at registration (also referred to as a primary IP address) and the other IP address is used as a secondary IP address. The secondary IP address is communicated to the UE during the registration process. According to examples of embodiments, this is the case when the communication element or communication function, such as a UE, has indicated to the network, i.e. the communication network control element or function, that it is configured for a so-called stand-by configuration in which is can participate in a control scheme where two IP addresses are used for logical associations and one thereof is used as a stand-by association.

As a result, two (or more) logical associations between the UE IP address and P-CSCF IP addresses are established. One of these logical associations is considered to be active (e.g. that of the primary IP address of the P-CSCF) while the other is considered as being a stand-by association. As soon as one of the sides (i.e. the UE or the P-CSCF) is not able to use the (currently) active association for whatever reason, the stand-by association can be used for replacing the failed association, i.e. the stand-by association is switched to be the (new) active association.

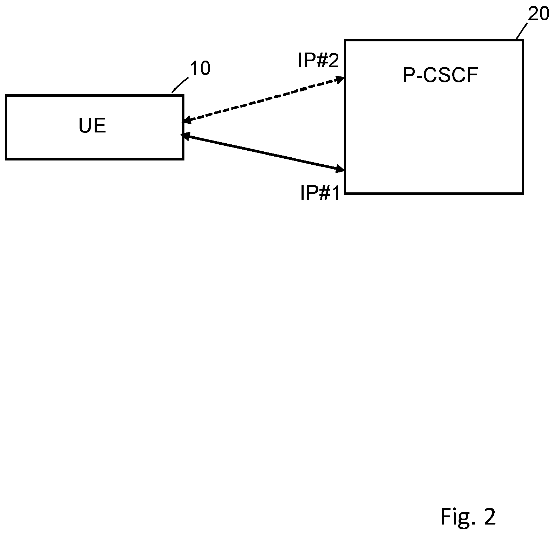

Fig. 2 shows a diagram illustrating an example of associations between a UE 10 (as an example of a communication element or communication function) and a P-CSCF 20 (as an example of a communication network control element or communication network control function) deployed in a cloud environment across various sites.

As shown in Fig. 2, the UE 10 (which uses one IP address) is linked to the P-CSCF via two logical associations, one between the UE 10 (i.e. the IP address thereof) and a first (primary) IP address IP#1 of the P-CSCF 20, which is considered as an active association, and another between the UE 10 (i.e. the IP address thereof) and a second (secondary) IP address IP#2 of the P-CSCF 20, which is considered as a stand-by association.

Due to this configuration, it can be ensured that in a case one side (e.g. the P-CSCF) intends to send a message (e.g. a SIP message such as an INVITE message) to the other side (e.g. the UE), this message is accepted on the receiving side even if it is sent via the other association, i.e. from a different IP address not being used for the registration. Vice versa, in case e.g. the UE intends to send an INVITE message, it is possible to fail-over the INVITE to the P-CSCF via the association with second P-CSCF IP address without a need for a re-registration.

It is to be noted that e.g. for a mobile access, a security association (SA) with IPsec (as defined e.g. in 3GPP TS 33.202) is to be made between the P-CSCF and the UE. When using the above configuration with two (or more) logical associations, it is necessary to establish a not only one SA but also a secondary SA. This will be described in further detail in the following.

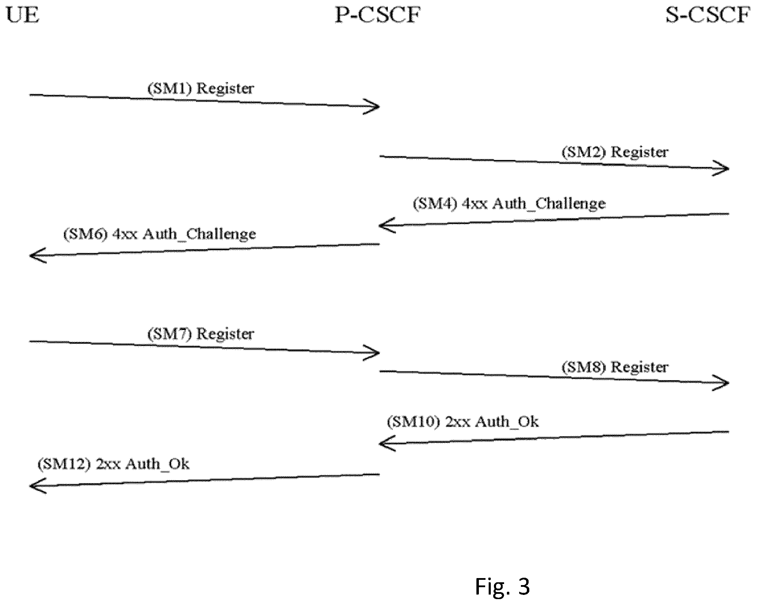

Fig. 3 shows a signaling diagram of a SIP message exchange at a registration process of a UE to the IMS, wherein an SA procedure is included. It is to be noted that only those nodes of the IMS are indicated which are required for understanding the principle underlying examples of embodiments, i.e. the UE, the P-CSCF and the S-CSCF, while other elements, such as the I-CSCF, are omitted for the sake of simplicity. Due to this, there are also gaps in the numbering of messages illustrated in Fig. 3.

Basically, according to examples of embodiments, when an SA procedure is conducted in order to establish the SA for the logical associations between the communication element, i.e. the UE, and the communication network control element or communication network control function, i.e. the P-CSCF, different options for the security setting are possible. That is, regarding ports (sender port and receiver port) at the UE side and the P-CSCF side, it is possible to use the same ports for the first and second security association, or to use different ports for the first and second security associations, respectively. Also a setting where only one of the sender and receiver port is different between the first and second SA is possible.

Furthermore, regarding security parameter index (SPI) values, it is possible that the communication network control element or function, e.g. the P-CSCF, which is provided with two different IP addresses, can use the same SPI values for the two SA. On the other hand, also examples where the communication network control element or function, e.g. the P-CSCF, uses different SPI values for each of the first security association and the second security association.

On the other hand, with regard to the communication element or communication function, i.e. the UE, since it is provided with only one IP address, the first and second security associations are used with different SPI values.

It is to be noted that generally both the first and second security associations use the same encryption algorithms or parameters and keys.

In a case where different parameters between the first and second security associations are used by one of the communication element or communication function (UE) on the one side and the communication network control element or communication network control function (P-CSCF) of the other side, the respective different setting has to be communicated to the other side by means of a suitable signaling, e.g. one of the SIP signaling described in the following.

The UE sends a Register message (SM1) towards the S-CSCF to register the location of the UE and to set-up the security mode. In order to start the security mode set-up procedure, the UE includes a *Security-setup-line* in this message. The *Security-setup-line* in SM1 contains various parameters, such as security parameter index (SPI) values and protected ports selected by the UE. For example, the UE includes two unique ports (one client and one server port) and two unique SPIs (one associated to the client port, and one associated to the server port) in the REGISTER message. It also contains a list of identifiers for the integrity and encryption algorithms, which the UE supports. Moreover, according to examples of embodiments, the SM1 message comprises an indication that the UE supports the new feature described above, i.e. the establishment of more than one logical association to the P-CSCF with different IP addresses for active and stand-by associations.

That is, the SM1 message can have the following contents.

REGISTER (Security-setup = *SPI_U, Port_U, UE integrity and encryption algorithms list, indication of feature support for multiple P-IPs).*

Here, SPI_U is a symbolic name of a pair of SPI values (e.g. spi_uc, spi_us) that the UE selects. *spi_uc* is the SPI of the inbound SA at UE's the protected client port, and *spi_us* is the SPI of the inbound SA at the UE's protected server port. Port_U is a symbolic name of a pair of port numbers (e.g. *port_uc, port_us).* The indication of support of the above described feature (i.e. stand-by configuration) is e.g. a flag set to a specified value (e.g. "1").

Upon receipt of SM1, the P-CSCF temporarily stores the parameters received in the *Security-setup-line* together with the UE's IP address from the source IP address of the IP packet header.

In SM2, the REGISTER message is forwarded to the S-CSCF.

Upon receipt of SM4, the P-CSCF adds keys IK_{IM} and CK_{IM} received from the S-CSCF to the temporarily stored parameters. The P-CSCF then selects the SPIs for the inbound SAs. The P-CSCF defines the SPIs such that they are unique and different from any SPIs as received in the *Security-setup-line* from the UE.

In order to determine the integrity and encryption algorithm the P-CSCF proceeds as follows: the P-CSCF has a list of integrity and encryption algorithms it supports, ordered by priority. The P-CSCF selects the first algorithm combination on its own list which is also supported by the UE. If the UE did not include any confidentiality algorithm in SM1 then the P-CSCF shall either select a NULL encryption algorithm or abort the procedure, according to its policy on confidentiality. The P-CSCF then establishes two new pairs of SAs in a local security association database.

Then, the P-CSCF sends an authentication challenge message in SM6 to the UE. The *Security-setup-line* in SM6 contains the SPIs and the ports assigned by the P-CSCF. It also contains a list of identifiers for the integrity and encryption algorithms, which the P-CSCF supports. Furthermore, in the response SM6 (e.g. 401), the P-CSCF provides a second IP address, e.g. from another site or another datacenter, which the UE shall use as backup IP address.

It is to be noted that the second IP address information can be provided to the UE also with another message, such as a confirmation message like SM12 (described later).

That is, the SM6 message can have the following contents.

401 Auth_Challenge (Security-setup = *SPI_P, Port_P, P-CSCF integrity and encryption algorithms list, back-up IP address)*

SPI_P is a symbolic name of the pair of SPI values (e.g. *spi_pc, spi_ps)* that the P-CSCF selects. *spi_pc* is the SPI of the inbound SA at the P-CSCF's protected client port, and *spi_ps* is the SPI of the inbound SA at the P-CSCF's protected server port. Port_P is a symbolic name of the port numbers (e.g. *port_pc, port_ps).*

Upon receipt of SM6, the UE determines the integrity and encryption algorithms as follows: the UE selects the first integrity and encryption algorithm combination on the list received from the P-CSCF in SM6 which is also supported by the UE. If the P-CSCF did not include any confidentiality algorithm in SM6 then the UE shall select the NULL encryption algorithm.

It is to be noted that the information provided in the first REGISTER message SM1 (i.e. the UE indicates the support for the stand-by configuration) and the provision of the second IP address in SM6 are necessary for both options when an SA is required and when no SA is required. In the following, it is assumed that IP Sec is used, i.e. security associations are required.

As indicated above, there are several options in this case. In one example, both UE and network (i.e. the P-CSCF) use the same port numbers. Furthermore, the P-CSCF use the same SPI values. Both sides use the same encryption parameters and keys for both security associations (i.e. the SA for IP#1 and the SA for IP#2). In this case, the SA information in SM6 is valid also for the second SA.

As another option, for example, in case it is better for UE to have different values for ports, then the corresponding parameters for the second SA are added to SM7, which is the second-round REGISTER process as described below. It is to be noted that since the UE uses different SPI values for both SA, an indication of this SPI values is sent to the network (the P-CSCF) in this message in any case.

After receiving the SM6 message, the UE proceeds to establish two new pairs of SAs. That is, the UE shall integrity and confidentiality protect SM7 and all following SIP messages. Furthermore, integrity and encryption algorithms list, *SPI_P,* and *Port_P* received in SM6, and *SPI_U, Port_U sent in SM1* shall be included. Moreover, the SM7 includes a new set of values for the SPI and port, as indicated above.

That is, the SM7 message can have the following contents.

REGISTER (Security-setup = *SPI_U Port U, SPI_P, Port_P, P-CSCF integrity and encryption algorithms list, SPI_U2.Port_U2)* where *SPI_U2, Port_U2* represent the new set of values *(Port_U2* is included when also another port is set for the second SA).

After receiving SM7 from the UE, the P-CSCF shall check whether the integrity and encryption algorithms list, *SPI_P* and *Port_P* received in SM7 is identical with the corresponding parameters sent in SM6. It further checks whether *SPI_U* and *Port_U* received in SM7 are identical with those received in SM1. If these checks are not successful, the registration procedure is aborted. Furthermore, the new set of values for the SPI and port is used for establishing a second SA between the UE and the P-CSCF, similar to the above described process.

In SM8, the P-CSCF includes information to the S-CSCF that the received message from the UE was integrity protected. The P-CSCF adds this information to all subsequent REGISTER messages received from the UE that have successfully passed the integrity check in the P-CSCF.

That is, the SM8 message can have the following contents.

REGISTER(lntegrity-Protection = *Successful,* IMPI)

The S-CSCF in SM10 and the P-CSCF in SM12 sends to the UE an indication that security mode setup has been successful. After receiving SM12 not indicating an error, the UE can assume the successful completion of the security-mode setup. As indicated above, SM12 can also be used by the P-CSCF to send the indication of the second IP address to the UE. This is the case, for example, in case the UE and network use the same port numbers, the same SPI values and the same encryption parameters and keys for both security associations.

With the message exchange described above, the UE and the P-CSCF can establish a security association as per existing standards (for the primary IP address), wherein both sides need to "create it on its side". Furthermore, the UE and the P-CSCF can establish another security association (a second one for the secondary IP address), wherein each side needs to create it on its side.

It is to be noted that the P-CSCF requires the ability to communicate or a notification service between the entities serving the two different IP addresses.

With the above described procedure, two logical associations between UE IP address and P-CSCF IP addresses are generated. One of these associations is considered active, the other is stand-by. As soon as one of the sides (UE or P-CSCF) cannot use the active association for whatever reason, it may use the stand-by association, which now becomes the active association. This applies to all messages one or the other side wishes to send (e.g. INVITE, MESSAGE, REGISTER).

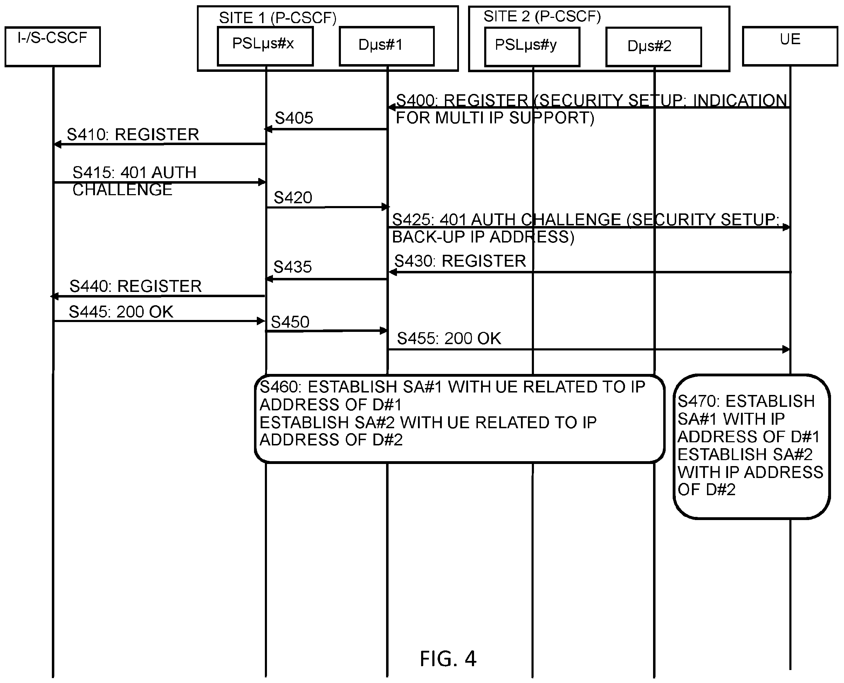

In the following, examples of embodiments are described for illustrating procedures in a communication control according to the above described concept. Specifically, in the following Figs. 4 to 7, signaling diagrams illustrating a respective example of a communication control procedure according to examples of embodiments of the invention are described.

Basically, in the following Figs. 4 to 7, call flows in a configuration in an IMS environment are illustrated wherein, as an example for a cloud based communication network control element or communication network control function, a P-CSCF is used. The P-CSCF is assumed to be spread over various sites (in the illustrated examples two sites, i.e. site 1 and site 2, of the cloud environment. Furthermore, the P-CSCF is assumed to be composed of different type of micro-services (µs). For the sake of simplicity, two types of micro-services are shown, i.e. one type handling the P-CSCF service logic (indicated as PSLµs in the figures), and another type handling the IP interface traffic (indicated as Dµs, i.e. dispatcher micro-service in the figures). It is to be noted that in reality the P-CSCF service logic may be de-composed further.

The dispatcher logic of the Dµs is coupled with the traffic of a specific local IP address, while the PSLµs is not coupled to an IP address. For example, following well-established cloud-native paradigms, the PSLµs may be stateless. Furthermore, relevant registration data are kept in a data micro-service, which is redundant such that both PSL#x and PSL#y can access the data. A corresponding data micro-service is provided, for example, by database 1010 in Fig. 1.

Thus, as explained above, the P-CSCF related instances in site 1 and site 2 form one (single) P-CSCF cloud-native network function instance wherein two (or more) IP addresses are assigned to the P-CSCF (i.e. one for each site).

Fig. 4 is related to a registration process of a UE in the IMS. The process in Fig. 4 is basically similar to that described in Fig. 3.

That is, in S400, the UE sends a Register message including security setup information and an indication that it supports the stand-by configuration (i.e. supports usage of multiple IP addresses for establishing logical associations) to the P-CSCF, i.e. to an IP address obtained for the P-CSCF. The used IP address belongs, for example, site 1 of the P-CSCF deployment, so that the Dµs#1 receives the message in S400. That is, S400 corresponds to SM1 of Fig. 3.

In S405, the Dµs#1 of the P-CSCF forwards the Register message received in S400 to the PSLµs#x of the P-CSCF, which in turn forwards this message in S410 to the I-/S-CSCF. That is, S410 corresponds to SM2 of Fig. 3.

In S415, the I-/S-CSCF sends a 401 Authentication challenge message to the UE via the P-CSCF. That is, the message is sent to the PSLµs#x of the P-CSCF, which in turn forwards this message in S420 to the Dµs#1 of the P-CSCF. That is, S415 corresponds to SM4 of Fig. 3.

In S425, the Dµs#1 of the P-CSCF sends the 401 Authentication challenge message to the UE, wherein the message includes besides security setup information also the second IP address which is related to Dµs#2 of site 2 of the P-CSCF. That is, S425 corresponds to SM6 of Fig. 3.

In S430, the second round of registration is conducted by sending a second Register message (which may include a second set of security setup information, at least the second SPI values of the UE) to the P-CSCF. The message is sent again to the first IP address belonging to site 1 of the P-CSCF deployment, so that the Dµs#1 receives the message in S430. That is, S430 corresponds to SM7 of Fig. 3.

In S435, the Dµs#1 of the P-CSCF forwards the (second) Register message received in S430 to the PSLµs#x of the P-CSCF, which in turn forwards this message in S440 to the I-/S-CSCF. That is, S440 corresponds to SM8 of Fig. 3.

In S445, the I-/S-CSCF sends a 200 OK message (registration confirmation message) to the UE via the P-CSCF. That is, the message is sent to the PSLµs#x of the P-CSCF, which in turn forwards this message in S450 to the Dµs#1 of the P-CSCF. That is, S445 corresponds to SM10 of Fig. 3.

In S455, the Dµs#1 of the P-CSCF sends the 200 OK message to the UE. That is, S455 corresponds to SM12 of Fig. 3. As indicated above, according to some examples of embodiments, the second IP address can be provided to the UE also in this message in S455.

Thus, in S460 and S470, security associations, i.e. an SA#1 related to the association between the first IP address of the P-CSCF (i.e. the Dµs#1 of the P-CSCF) and the IP address of the UE, and an SA#2 related to the association between the second IP address of the P-CSCF (i.e. the Dµs#2 of the P-CSCF) and the IP address of the UE, are established on both sides, i.e. the P-CSCF and the UE.

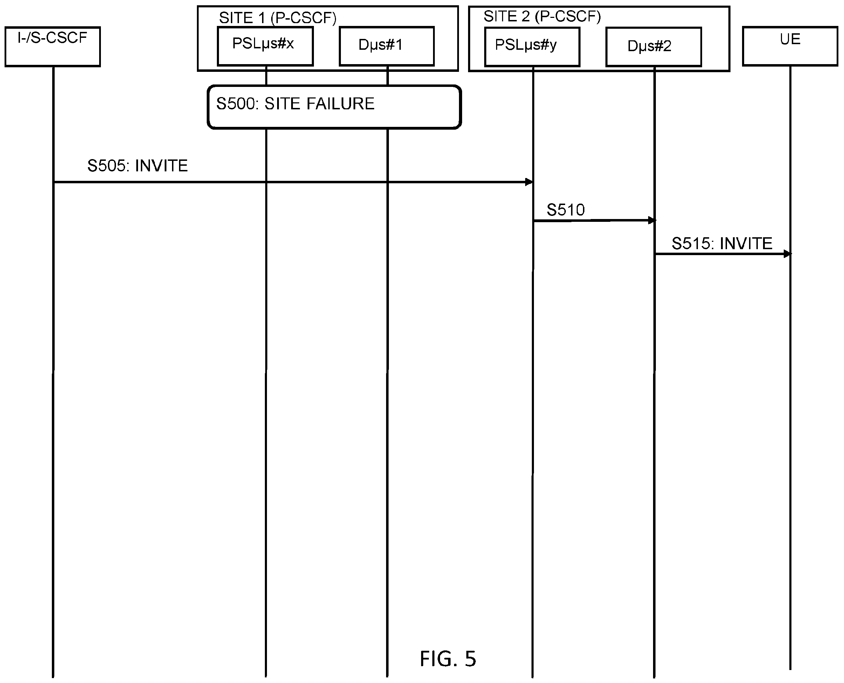

Fig. 5 is related to a control process when one of the sites of the communication network control element or communication network control function (i.e. the P-CSCF) is in a failure state (see S500), i.e. it cannot be reached by the network or UE. Specifically, Fig. 5 is related to a case where a terminating call for the UE arrives.

Since the network (i.e. the I-/S-CSCF) cannot reach, for example, the site 1 of the P-CSCF, in S505, an INVITE message is sent via the other association which was so far the stand-by association. That is, the INVITE message is sent to the PSLµs#y of the P-CSCF, which in turn forwards this message in S510 to the Dµs#2 of the P-CSCF.

In S515, the Dµs#2 of the P-CSCF sends the INVITE message to the UE. Since the UE is configured to receive also information via the stand-by association, the INVITE message can be processed as usual.

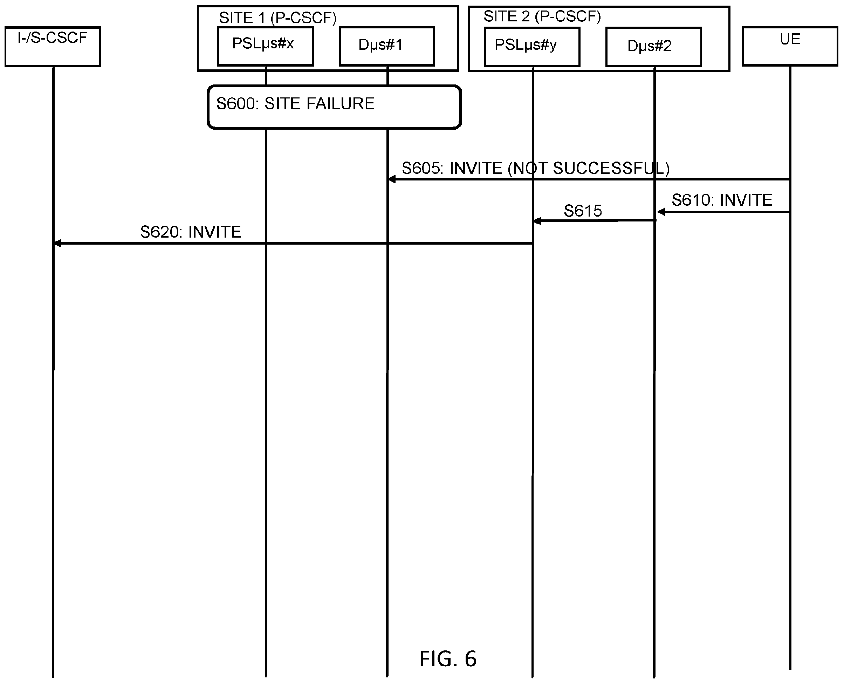

Fig. 6 is related to another control process when one of the sites of the communication network control element or communication network control function (i.e. the P-CSCF) is in a failure state (see S600), i.e. it cannot be reached by the network or UE. Specifically, Fig. 6 is related to a case where where the UE wants to establish a call after a failure of site 1.

In S605, the UE tries to reach IP#1 of Dµs#1 by sending an INVITE message, but this is not successful due to the failure state of site 1. Consequently, in S610, the UE retries the sending of the message by transmitting it to the IP#2 of Dµs#2. Since site 2 is operable, in S615, the Dµs#2 of the P-CSCF sends the INVITE message to the PSLµs#y of the P-CSCF, which in turn forwards this message in S620 to the network, i.e. the I-/S-CSCF. Thus, when the first attempt to reach the P-CSCF fails, the UE does not need to start with a completely new initial registration (with both rounds) at a new IP address to establish a new security association, but can use instead the stand-by association to the P-CSCF via the second IP address.

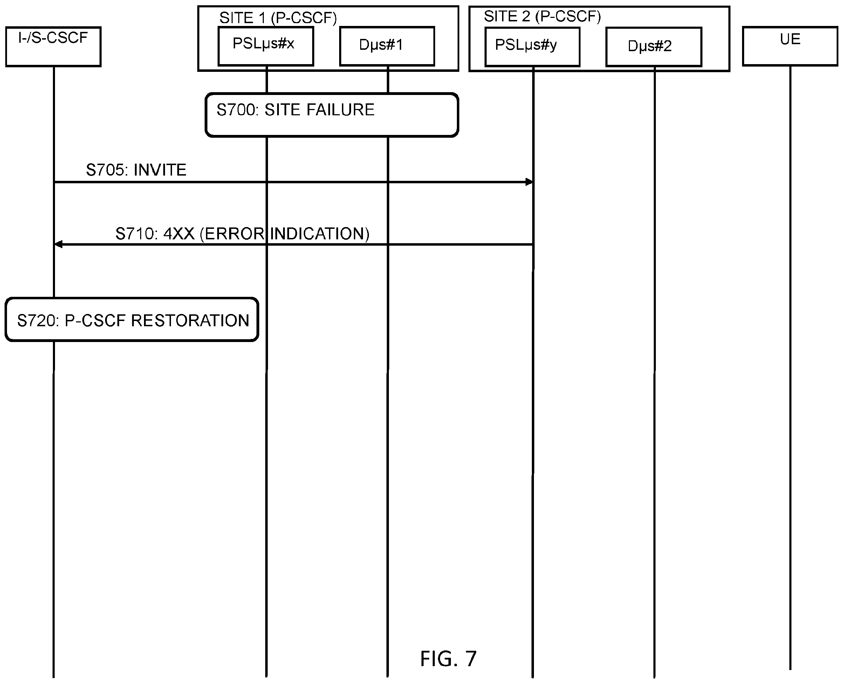

Fig. 7 is related to a control procedure when it turns out that a UE registers at the network which is not configured for the above described stand-by configuration, i.e. for example a legacy UE. In other words, the UE considered in Fig. 7 does not support the measures described above with regard to the usage of more than one IP address at the communication network control element or function (e.g. the P-CSCF). This is recognized, for example, by the network side when a corresponding indication in the first register message is missing.

For such UEs, in case a failure state at the active association (i.e. site 1) of the P-CSCF occurs (see S700), a P-CSCF (application-level) restoration should be triggered. However, as the I-/S-CSCF can reach the P-CSCF (at least the still operational site 2), for enabling triggering of such a P-CSCF restoration, a specific error code or a corresponding indication e.g. in a 4xx response from the P-CSCF to the I-/S-CSCF is implemented.

That is, when the P-CSCF receives in S705 an invite message for the UE and recognizes that it cannot send this message from the available IP addresses (dispatcher micro-services) to the UE, the P-CSCF returns in S710 a 4xx message or indication in a 4xx message to the I-/S-CSCF. On the basis of this indication, the I-/S-CSCF can trigger a P-CSCF restoration procedure in S720, e.g. according to standardized processes.

According to examples of embodiments described above, cases are considered in which one logical association fails and the communication is continued by switching to the other (the stand-by) association. According to further examples of embodiments, a case is considered where the failed association becomes available again. In this situation, the communication element or function (i.e. the UE, for example) and the communication network control element or function (i.e. the P-CSCF, for example, can fall back to the use of primary IP address, once it becomes available again.

A mechanism to fall back to the formerly used logical association can be set according to corresponding standardization and implementation. In the context of examples of embodiments, both sides are prepared to receive a message through any of the two logical associations. Thus, when there is an error, which makes an active IP address (i.e. of the P-CSCF) unreachable from the UE or the UE unreachable from an active IP address, e.g. based on a transport level failure, the other established association can be tried to be used, in order to avoid a complete restoration or the like.

Furthermore, according to examples of embodiments described above, it is assumed that a failover and failback procedure is handled symmetrically, i.e. both communication element or function side (i.e. the UE, for example) and the network side (i.e. the P-CSCF, for example) can initiate a process according to the stand-by configuration, i.e. fail-over to the other IP address, if the primary logical association becomes unavailable. This solution offers several advantages, but it is to be noted that the network may lose some control of traffic distribution across its IP addresses.

Thus, according to further examples of embodiments, a network controlled approach is provided. In the network controlled approach, the UE is not configured to conduct a failover itself, i.e. switch to another logical association. Instead, the UE has to be ready to receive a terminating message (INVITE, MESSAGE, etc.) from both the primary and the secondary IP address. After having received a message from the secondary IP address (i.e. via the stand-by association), the roles of IP addresses is switched, that is the logical association being formerly considered as the active association becomes the stand-by association, while the logical association being formerly considered as the stand-by association (and via which the terminating message is received) becomes the (new) active association which the UE may use now for originating requests. It is to be noted that in the network controlled approach, in case the UE detects a failure regarding the (current) active logical association, the UE uses a conventional mechanism to failover, such as a P-CSCF restoration process.

That is according to examples of embodiments, the following configuration is provided for elements or functions involved in a communication control procedure.

On the communication network control element or communication network control function side, such as the P-CSCF, which is deployed in a cloud environment, for example, and uses more than one IP address, an indication of a second IP address of the P-CSCF is added in a registration related message, such as in SM6 or SM12 as described above with regard to a SIP register procedure, towards the UE. Furthermore, a second IP Sec association can be established, either immediately or triggered by a re-REGISTER message from UE. Moreover, the communication network control element or communication network control function side, such as the P-CSCF, stores or remembers the primary point of attachment with the UE (e.g. the IP address used for initial registration procedure). The communication network control element or communication network control function, such as the P-CSCF, is ready to receive messages on both primary and secondary IP Sec associations. As an alternative, in a network controlled variant of the control scheme, the communication network control element or communication network control function, such as the P-CSCF, ignores or rejects messages which are sent via the stand-by association (e.g. the secondary IP address when the association related to the first IP address is set as the active association). Furthermore, the communication network control element or communication network control function, such as the P-CSCF, is configured to use the secondary IP Sec association, if the primary IP Sec association becomes unavailable. In addition, the communication network control element or communication network control function, such as the P-CSCF, respond with an error message, such as a 4xx message, in case a UE which does not support the stand-by configuration is concerned, which is registered in the P-CSCF but cannot be reached from the site assumed to be the current active site.

Furthermore, regarding the network side, in a serving communication network control element or communication network control function, such as the S-CSCF, a restoration procedure for connecting the UE to a (new) communication network control element or communication network control function, such as the P-CSCF, is to be triggered when the specific 4xx error code or the like is received.

On the side of the communication element or communication function, such as the UE, when the stand-by configuration is supported, an SA for the association considered to be active (related to the primary IP address of the P-CSCF) and an SA for the association considered to be stand-by (related to the secondary IP address of the P-CSCF) can be established when the UE receives the second IP address from the P-CSCF, e.g. in a 200 OK message, as described above. Furthermore, the UE stores the secondary IP address. In addition, the UE is ready to receive messages on both primary and secondary IP Sec associations. When a failure or the like in the active association is determined, a failover between the IP addresses is made (i.e. the (stand-by) secondary IP Sec association is used, if the primary IP Sec association becomes unavailable).

It is to be noted that in case the network controlled variant is implemented, a switch of the active association to the other association is not initiated by the UE. In this case, the UE only makes a failover between IP addresses and a switch of the roles of the IP addresses after receiving a message via the association being considered to be in stand-by (i.e. the association related to the secondary IP address, for example).

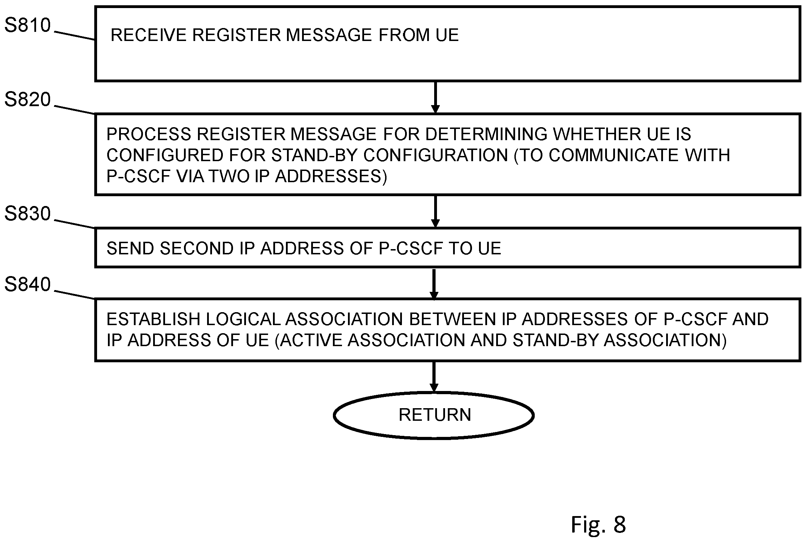

Fig. 8 shows a flow chart of a processing conducted in a communication network control element or communication network control function according to some examples of embodiments, wherein the communication network control element or communication network control function uses at least two IP addresses. That is, Fig. 8 shows a flowchart related to a processing conducted by a communication network control element or communication network control function, such as a P-CSCF as also described in connection with Figs. 2 to 7, which is deployed in a computer cloud environment across a plurality of sites each having an own IP address, and is configured to operate as a P-CSCF, wherein parts deployed in different sites are configured to exchange information between each other.

In S810, a register message from a communication element or communication function, e.g. UE 10, is received via a communication using a first IP address of the communication network control element or communication network control function (i.e. primary IP address).

In S820, the register message is processed in order to determine whether the communication element or communication function is configured for a stand-by configuration. For example, it is checked whether the register message or another message provided by the UE comprises an indication that the stand-by configuration is supported. The stand-by configuration means that the UE is configured to conduct a processing as described above, i.e. that at least two IP addresses of the communication network control element or communication network control function are usable for a communication connection with the communication element or communication function (one as active connection, the other as stand-by connection).

In S830, in case the determination made in S820 is affirmative, the communication network control element or communication network control function sends to the communication element or communication function an indication of a second IP address of the communication network control element or communication network control function. The second IP address is different to the first IP address and represents the secondary IP address as described above.

According to examples of embodiments, the indication of the second IP address of the communication network control element or communication network control function is sent to the communication element or communication function in the context of the register procedure, e.g. by means of an authentication challenge message or in an authentication confirmation message.

In S840, a first logical association between the first IP address of the communication network control element or communication network control function and an IP address of the communication element or communication function is established. Moreover, a second logical association between the second IP address of the communication network control element or communication network control function and the IP address of the communication element or communication function is established. From these logical associations, one is considered as an active association (i.e. used for current communication) while the other is considered as a stand-by association, as described above.

According to some examples of embodiments, as a part of the stand-by configuration in the establishment of the logical associations, a security setup procedure is conducted. Here, a security association for each of the first and second logical associations is established. As also described above, the security associations for the first logical association and the second logical association can consider different settings and includes at least one of the following.

In a first setting, the same port numbers for sender ports of the security association for the first logical association and the security association for the second logical association are used. In addition, the same port numbers for receiver ports of the security association for the first logical association and the security association for the second logical association are used.

In a second setting, different port numbers for sender ports of the security association for the first logical association and the security association for the second logical association are used. Moreover, different port numbers for receiver ports of the security association for the first logical association and the security association for the second logical association are used.

In a third setting, the same security parameter index values for the security association for the first logical association and the security association for the second logical association are used. On the other hand, in a fourth setting, different security parameter index values for the security association for the first logical association and the security association for the second logical association are used.

Moreover, the security associations for the first logical association and the second logical association further includes to use the same encryption parameters and keys for the security association for the first logical association and the security association for the second logical association.

According to further examples of embodiments, information regarding at least one of the first to fourth setting used for the security associations for the first logical association and the second logical association is sent to the communication element or communication function. In particular when different parameters between the first and second security association are used, a corresponding information is provided to the UE. Furthermore, information regarding a setting used for the security associations for the first logical association and the second logical association in the communication element or communication function (i.e. the UE) is received. The information is processed for the security association.

When the logical (security) associations are established, according to examples of embodiments, information is received and sent from or to the communication element or communication function by using the first logical association or the second logical association. According to examples of embodiment, the logical association considered as the active association is used for the data transmission. However, a switch to the other association can be made. Furthermore, according to examples of embodiments, when information is received via the other logical association (i.e. the stand-by association), this information is processed as well. That is, according to examples of embodiments, information received from the communication element or communication function via the first logical association and the second logical association is equally processed. Alternatively, according to other examples of embodiments, only information received from the communication element or communication function via the logical association considered as the active association is processed. Information or data received from the communication element or communication function via the logical association considered as the stand-by association is rejected or ignored. This corresponds to the network controlled variant described above, for example.

According to further examples of embodiments, it is determined whether a communication connection using one of the first and second logical associations becomes unavailable, in particular the logical association being considered as the active association. In case the determination is affirmative, i.e. the logical association being considered as the active association is unavailable, the communication connection using the other of the first and second logical associations (i.e. the stand-by association) is used as the (now) active association.

Moreover, according to examples of embodiments, when one of the logical associations was determined to become unavailable, it is determined whether the communication connection determined to be unavailable becomes available again. In case the determination is affirmative, the communication connection being available again (i.e. the logical association being formerly considered as being the active association (the primary association) is reselected as being the active association.

According to further examples of embodiments, in case the determination in S820 (i.e. whether the communication element or communication function is configured for the stand-by configuration) is negative (e.g. a legacy UE is connected), the following process is considered. A logical association between the first IP address of the communication network control element or communication network control function and the IP address of the communication element or communication function is established. Now, when it is determined that a communication connection using the (only) logical association becomes unavailable, an error code is sent to a serving network node or a serving network function (e.g. the S-CSCF) indicating that a restoration procedure for the communication network control element or communication network control function is to be conducted. This allows the S-CNCF to recognize that the UE is not reachable via the P-CSCF even though the P-CSCF is still available for the S-CSCF.

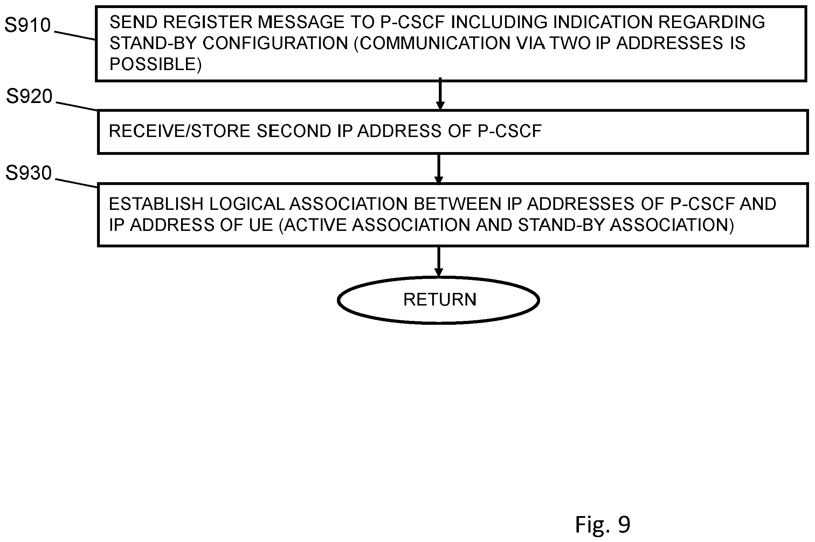

Fig. 9 shows a flow chart of a processing conducted in a communication element or communication function according to some examples of embodiments, wherein the communication element or communication function is configured for a stand-by configuration. The stand-by configuration means that the UE is configured to conduct a processing as described above, i.e. that at least two IP addresses of the communication network control element or communication network control function are usable for a communication connection with the communication element or communication function (one as active connection, the other as stand-by connection). That is, Fig. 9 shows a flowchart related to a processing conducted by a communication element or communication function, such as a US as also described in connection with Figs. 2 to 7, wherein a communication network control element or communication network control function with which a logical association for a communication connection is established is deployed in a computer cloud environment across a plurality of sites each having an own IP address, wherein the communication network control element or communication network control function is configured, for example, to operate as a P-CSCF.

In S910, a register message is sent to a communication network control element or communication network control function via a communication using a first IP address of the communication network control element or communication network control function (i.e. primary IP address). The register message comprising an indication that the communication element or communication function is configured for the stand-by configuration.

In S920, an indication of a second IP address of the communication network control element or communication network control function is received from the communication network control element or communication network control function. The second IP address is different to the first IP address, and represents the secondary IP address as described above. Then, the second IP address is stored.

According to examples of embodiments, the indication of the second IP address of the communication network control element or communication network control function is received from the communication network control element or communication network control function in the context of the register procedure, e.g. by means of an authentication challenge message or in an authentication confirmation message.

In S930, a first logical association between the first IP address of the communication network control element or communication network control function and an IP address of the communication element or communication function is established. Moreover, a second logical association between the second IP address of the communication network control element or communication network control function and the IP address of the communication element or communication function is established. From these logical associations, one is considered as an active association (i.e. used for current communication) while the other is considered as a stand-by association, as described above.

According to some examples of embodiments, as a part of the stand-by configuration in the establishment of the logical associations, a security setup procedure is conducted.

Here, a security association for each of the first and second logical associations is established. As also described above, the security associations for the first logical association and the second logical association can consider different settings and includes at least one of the following.

In a fifth setting, the same port numbers for sender ports of the security association for the first logical association and the security association for the second logical association are used. Moreover, the same port numbers for receiver ports of the security association for the first logical association and the security association for the second logical association are used.

In a sixth setting, different port numbers for sender ports of the security association for the first logical association and the security association for the second logical association are used. In addition, different port numbers for receiver ports of the security association for the first logical association and the security association for the second logical association are used.

Moreover, the security associations for the first logical association and the second logical association further includes to use different security parameter index values for the security association for the first logical association and the security association for the second logical association. On the other hand, the same encryption parameters and keys are used for the security association for the first logical association and the security association for the second logical association.

According to further examples of embodiments, information regarding at least one of the fifth or sixth setting used for the security associations for the first logical association and the second logical association is sent to the communication network control element or communication network control function. In particular when different parameters between the first and second security association are used, a corresponding information is provided to the P-CSCF. That is, information regarding the security parameter index values for the security association for the first logical association and the security association for the second logical association to the communication network control element or communication network control function is sent to the P-CSCF. Furthermore, information regarding a setting used for the security associations for the first logical association and the second logical association in the communication network control element or communication network control function (i.e. the P-CSCF) is received. The information is processed for the security association.

When the logical (security) associations are established, according to examples of embodiments, information is received and sent from or to the communication network control element or communication network control function by using the first logical association or the second logical association. According to examples of embodiment, the logical association considered as the active association is used for the data transmission. However, a switch to the other association can be made. Furthermore, according to examples of embodiments, when information is received via the other logical association (i.e. the stand-by association), this information is processed as well. That is, according to examples of embodiments, information received from the communication element or communication function via the first logical association and the second logical association is equally processed.

Alternatively, according to other examples of embodiments, information is received or sent from or to the communication network control element or communication network control function by using only the logical association considered to be the active logical association. In case information is received from the communication network control element or communication network control function by using the logical association considered to be the stand-by logical association, the logical association considered so far as being the stand-by logical association is switched to become the logical association considered to be the active logical association. This corresponds to the network controlled variant described above, for example.

According to further examples of embodiments, information is received or sent from or to the communication network control element or communication network control function by using the logical association considered to be the active logical association. Now, in case it is determined that a communication using the logical association considered to be the active logical association is not successful (e.g. the current active association become unavailable), the logical association considered so far as being the stand-by logical association is switched to become the logical association considered to be the active logical association. Then, the communication is re-tried by using the logical association considered after the switching as being (now) the active logical association.

According to further examples of embodiments, it is determined by the UE whether a communication connection using one of the first and second logical associations becomes unavailable, in particular the logical association being considered as the active association. In case the determination is affirmative, i.e. the logical association being considered as the active association is unavailable, the communication connection using the other of the first and second logical associations (i.e. the stand-by association) is used as the (now) active association.

Moreover, according to examples of embodiments, when one of the logical associations was determined to become unavailable, it is determined whether the communication connection determined to be unavailable becomes available again. In case the determination is affirmative, the communication connection being available again (i.e. the logical association being formerly considered as being the active association (the primary association) is reselected as being the active association.

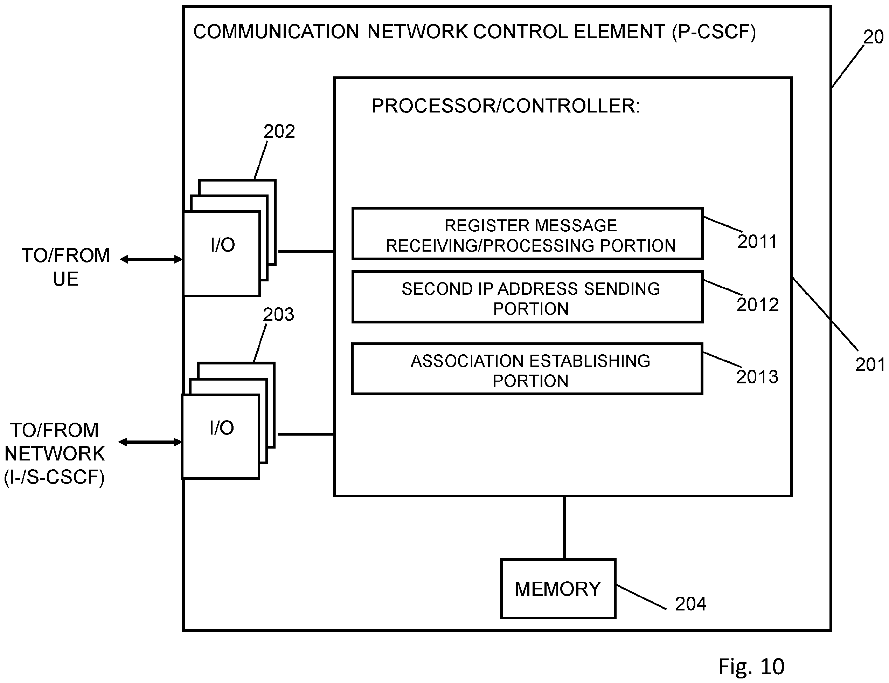

Fig. 10 shows a diagram of a communication network control element or communication network control function, such as a P-CSCF 20, configured to be deployed in a computer cloud environment with a plurality of IP address being related thereto, which conducts a communication control according to some examples of embodiments, as described in connection with Figs. 2 to 7, which is configured to conduct a processing according to examples of embodiments of the disclosure. It is to be noted that the network element or function such as the P-CSCF 20 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The P-CSCF 20 shown in Fig. 10 may include a processing circuitry, a processing function, a control unit or a processor 201, such as a CPU or the like, which is suitable for executing instructions given by programs or the like related to the control procedure. The processor 201 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 202 and 203 denotes input/output (I/O) units or functions (interfaces) connected to the processor or processing function 201. The I/O units 202 may be used for communicating with a communication element or communication function, such as the UE, as shown in Fig. 2. The I/O units 203 may be used for communicating with network functions such as an I-/ S-CSCF. The I/O units 202 and 203 may be combined units including communication equipment towards several entities, or may include a distributed structure with a plurality of different interfaces for different entities. Reference sign 204 denotes a memory usable, for example, for storing data and programs to be executed by the processor or processing function 201 and/or as a working storage of the processor or processing function 201. It is to be noted that the memory 204 may be implemented by using one or more memory portions of the same or different type of memory.

The processor or processing function 201 is configured to execute processing related to the above described control procedure. In particular, the processor or processing circuitry or function 201 includes one or more of the following sub-portions. Sub-portion 2011 is a processing portion which is usable as a portion for receiving and processing a register message from a UE or the like. The portion 2011 may be configured to perform processing according to S810 and S820 of Fig. 8. Furthermore, the processor or processing circuitry or function 201 may include a sub-portion 2012 usable as a portion for sending a second IP address. The portion 2012 may be configured to perform a processing according to S830 of Fig. 8. In addition, the processor or processing circuitry or function 201 may include a sub-portion 2013 usable as a portion for establishing logical associations. The portion 2013 may be configured to perform a processing according to S840 of Fig. 8.

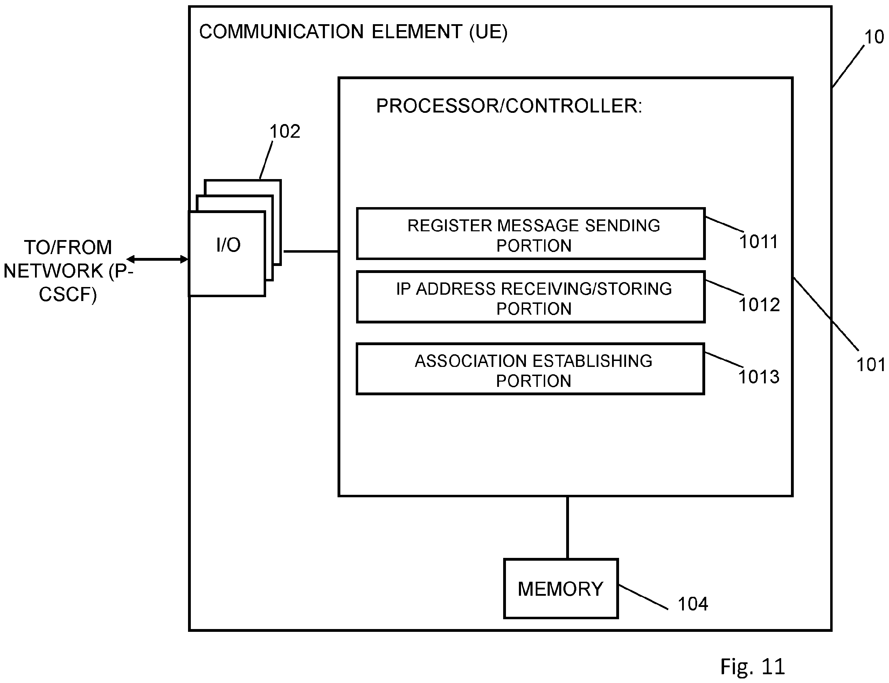

Fig. 11 shows a diagram of a communication element or communication function, such as UE 10, configured for a stand-by configuration, which conducts a communication processing according to some examples of embodiments, as described in connection with Figs. 2 to 7, which is configured to conduct a processing according to examples of embodiments of the disclosure. It is to be noted that the network element or function such as the UE 10 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The UE 10 shown in Fig. 11 may include a processing circuitry, a processing function, a control unit or a processor 101, such as a CPU or the like, which is suitable for executing instructions given by programs or the like related to the control procedure. The processor 101 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 102 denotes input/output (I/O) units or functions (interfaces) connected to the processor or processing function 101. The I/O units 102 may be used for communicating with network functions such as P-CSCF 20. The I/O unit 102 may be combined units including communication equipment towards several entities, or may include a distributed structure with a plurality of different interfaces for different entities. Reference sign 104 denotes a memory usable, for example, for storing data and programs to be executed by the processor or processing function 101 and/or as a working storage of the processor or processing function 101. It is to be noted that the memory 104 may be implemented by using one or more memory portions of the same or different type of memory.

The processor or processing function 101 is configured to execute processing related to the above described control procedure. In particular, the processor or processing circuitry or function 101 includes one or more of the following sub-portions. Sub-portion 1011 is a processing portion which is usable as a portion for sending a register message to the network. The portion 1011 may be configured to perform processing according to S910 of Fig. 9. Furthermore, the processor or processing circuitry or function 101 may include a sub-portion 1012 usable as a portion for receiving and storing a (second) IP address. The portion 1012 may be configured to perform a processing according to S920 of Fig. 9. In addition, the processor or processing circuitry or function 101 may include a sub-portion 1013 usable as a portion for establishing logical associations. The portion 1013 may be configured to perform a processing according to S930 of Fig. 9.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operation environment may be used in connection with examples of embodiments of the disclosure based on the principles defined.

Furthermore, even though in the above examples of embodiments mainly a P-CSCF is described as a communication network control element or communication network control function for which the proposed control procedure is applied, examples of embodiments may concern also other communication network control elements or communication network control functions for which a corresponding processing is applicable and which can be deployed in a computer cloud environment at different sites (e.g. different availability zones) by using more than one IP address.

In addition, while in the above examples of embodiments, for signaling and transmission purposes between the respective network elements or network functions a SIP based communication is described, also other protocols or message types can be used for providing required information between the elements involved in the processing.

According to a further example of embodiments, there is provided, for example, an apparatus for use by a communication network control element or communication network control function using at least two Internet Protocol, IP, addresses, the apparatus comprising means configured to receive a register message from a communication element or communication function via a communication using a first IP address of the communication network control element or communication network control function, means configured to process the register message for determining whether the communication element or communication function is configured for a stand-by configuration in which at least two IP addresses of the communication network control element or communication network control function are usable for a communication connection with the communication element or communication function, means configured, in case the determination is affirmative, to send to the communication element or communication function an indication of a second IP address of the communication network control element or communication network control function, the second IP address being different to the first IP address, and means configured to establish a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

Furthermore, according to some other examples of embodiments, the above defined apparatus may further comprise means for conducting at least one of the processing defined in the above described methods, for example a method according to that described in connection with Fig. 8.

According to a further example of embodiments, there is provided, for example, an apparatus for use by a communication element or communication function configured for a stand-by configuration in which at least two Internet protocol, IP, addresses of a communication network control element or communication network control function are usable for a communication connection with the communication element or communication function, the apparatus comprising means configured to send a register message to a communication network control element or communication network control function via a communication using a first IP address of the communication network control element or communication network control function, the register message comprising an indication that the communication element or communication function is configured for the stand-by configuration, means configured to receive, from the communication network control element or communication network control function, an indication of a second IP address of the communication network control element or communication network control function, the second IP address being different to the first IP address, means configured to store the second IP address, and means configured to establish a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

Furthermore, according to some other examples of embodiments, the above defined apparatus may further comprise means for conducting at least one of the processing defined in the above described methods, for example a method according to that described in connection with Fig. 9.

According to a further example of embodiments, there is provided, for example, a non-transitory computer readable medium comprising program instructions for causing an apparatus to perform, when used in a communication network control element or communication network control function using at least two Internet Protocol, IP, addresses, a processing comprising receiving a register message from a communication element or communication function via a communication using a first IP address of the communication network control element or communication network control function, processing the register message for determining whether the communication element or communication function is configured for a stand-by configuration in which at least two IP addresses of the communication network control element or communication network control function are usable for a communication connection with the communication element or communication function, in case the determination is affirmative, sending to the communication element or communication function, an indication of a second IP address of the communication network control element or communication network control function, the second IP address being different to the first IP address, and establishing a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

According to a further example of embodiments, there is provided, for example, a non-transitory computer readable medium comprising program instructions for causing an apparatus to perform, when used in a communication element or communication function configured for a stand-by configuration in which at least two Internet protocol, IP, addresses of a communication network control element or communication network control function are usable for a communication connection with the communication element or communication function, a processing comprising sending a register message to a communication network control element or communication network control function via a communication using a first IP address of the communication network control element or communication network control function, the register message comprising an indication that the communication element or communication function is configured for the stand-by configuration, receiving, from the communication network control element or communication network control function, an indication of a second IP address of the communication network control element or communication network control function, the second IP address being different to the first IP address, storing the second IP address, and establishing a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

According to examples of embodiments, the following aspects are provided:
Aspect 1) An apparatus for use by a communication network control element or communication network control function using at least two Internet Protocol, IP, addresses, the apparatus comprising at least one processing circuitry, and at least one memory for storing instructions to be executed by the processing circuitry, wherein the at least one memory and the instructions are configured to, with the at least one processing circuitry, cause the apparatus at least: to receive a register message from a communication element or communication function via a communication using a first IP address of the communication network control element or communication network control function,to process the register message for determining whether the communication element or communication function is configured for a stand-by configuration in which at least two IP addresses of the communication network control element or communication network control function are usable for a communication connection with the communication element or communication function, in case the determination is affirmative, to send to the communication element or communication function an indication of a second IP address of the communication network control element or communication network control function, the second IP address being different to the first IP address, and to establish a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.
Aspect 2) The apparatus according to aspect 1, wherein the at least one memory and the instructions are further configured to, with the at least one processing circuitry, cause the apparatus at least: to conduct, as part of the stand-by configuration, a security setup procedure by establishing a security association for each of the first and second logical associations, wherein the security associations for the first logical association and the second logical association includes at least one of a first setting comprising using the same port numbers for sender ports of the security association for the first logical association and the security association for the second logical association, and using the same port numbers for receiver ports of the security association for the first logical association and the security association for the second logical association, a second setting comprising using different port numbers for sender ports of the security association for the first logical association and the security association for the second logical association, and using different port numbers for receiver ports of the security association for the first logical association and the security association for the second logical association, a third setting comprising using the same security parameter index values for the security association for the first logical association and the security association for the second logical association, and a fourth setting comprising using different security parameter index values for the security association for the first logical association and the security association for the second logical association, wherein the security associations for the first logical association and the second logical association further includes to use the same encryption parameters and keys for the security association for the first logical association and the security association for the second logical association.
Aspect 3) The apparatus according to aspect 2, wherein the at least one memory and the instructions are further configured to, with the at least one processing circuitry, cause the apparatus at least: to send information regarding at least one of the first to fourth setting used for the security associations for the first logical association and the second logical association to the communication element or communication function; and to receive information regarding a setting used for the security associations for the first logical association and the second logical association in the communication element or communication function.
Aspect 4) The apparatus according to any of aspects 1 to 3, wherein the at least one memory and the instructions are further configured to, with the at least one processing circuitry, cause the apparatus at least: to send the indication of the second IP address of the communication network control element or communication network control function to the communication element or communication function in an authentication challenge message or in an authentication confirmation message.
Aspect 5) The apparatus according to any of aspects 1 to 4, wherein the at least one memory and the instructions are further configured to, with the at least one processing circuitry, cause the apparatus at least: to receive or send information from or to the communication element or communication function by using the first logical association or the second logical association, wherein the at least one memory and the instructions are further configured to, with the at least one processing circuitry, cause the apparatus to process information received from the communication element or communication function via the first logical association and the second logical association, or to process information received from the communication element or communication function via the logical association considered as the active association and to reject information received from the communication element or communication function via the logical association considered as the stand-by association.
Aspect 6) The apparatus according to any of aspects 1 to 5, wherein the at least one memory and the instructions are further configured to, with the at least one processing circuitry, cause the apparatus at least: to determine whether a communication connection using one of the first and second logical associations becomes unavailable, and in case the determination is affirmative, to use the communication connection using the other of the first and second logical associations as the active association.
Aspect 7) The apparatus according to aspect 6, wherein the at least one memory and the instructions are further configured to, with the at least one processing circuitry, cause the apparatus at least: to determine whether the communication connection determined to be unavailable becomes available again, and in case the determination is affirmative, to use again the communication connection being available again as the active association.
Aspect 8) The apparatus according to any of aspects 1 to 7, wherein the at least one memory and the instructions are further configured to, with the at least one processing circuitry, cause the apparatus at least: in case the determination whether the communication element or communication function is configured for the stand-by configuration is negative, to establish a logical association between the first IP address of the communication network control element or communication network control function and the IP address of the communication element or communication function, to determine whether a communication connection using the logical association becomes unavailable, and in case the determination is affirmative, to send an error code to a serving network node or a serving network function indicating that a restoration procedure for the communication network control element or communication network control function is to be conducted.
Aspect 9) The apparatus according to any of aspects 1 to 8, wherein the communication network control element or communication network control function is deployed in a computer cloud environment across a plurality of sites each having an own IP address, and is configured to operate as a proxy call state control function in an IP multimedia subsystem, wherein parts deployed in different sites are configured to exchange information between each other.
Aspect 10) A method for use in a communication network control element or communication network control function using at least two Internet Protocol, IP, addresses, the method comprising receiving a register message from a communication element or communication function via a communication using a first IP address of the communication network control element or communication network control function, processing the register message for determining whether the communication element or communication function is configured for a stand-by configuration in which at least two IP addresses of the communication network control element or communication network control function are usable for a communication connection with the communication element or communication function, in case the determination is affirmative, sending to the communication element or communication function, an indication of a second IP address of the communication network control element or communication network control function, the second IP address being different to the first IP address, and establishing a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.
Aspect 11) The method according to aspect 10, further comprising conducting, as part of the stand-by configuration, a security setup procedure by establishing a security association for each of the first and second logical associations, wherein the security associations for the first logical association and the second logical association includes at least one of a first setting comprising using the same port numbers for sender ports of the security association for the first logical association and the security association for the second logical association, and using the same port numbers for receiver ports of the security association for the first logical association and the security association for the second logical association, a second setting comprising using different port numbers for sender ports of the security association for the first logical association and the security association for the second logical association, and using different port numbers for receiver ports of the security association for the first logical association and the security association for the second logical association, a third setting comprising using the same security parameter index values for the security association for the first logical association and the security association for the second logical association, and a fourth setting comprising using different security parameter index values for the security association for the first logical association and the security association for the second logical association, wherein the security associations for the first logical association and the second logical association further includes to use the same encryption parameters and keys for the security association for the first logical association and the security association for the second logical association.
Aspect 12) The method according to aspect 11, further comprising sending information regarding at least one of the first to fourth setting used for the security associations for the first logical association and the second logical association to the communication element or communication function; and receiving information regarding a setting used for the security associations for the first logical association and the second logical association in the communication element or communication function.
Aspect 13) The method according to any of aspects 10 to 12, further comprising sending the indication of the second IP address of the communication network control element or communication network control function to the communication element or communication function in an authentication challenge message or in an authentication confirmation message.
Aspect 14) The method according to any of aspects 10 to 13, further comprising receiving or sending information from or to the communication element or communication function by using the first logical association or the second logical association, wherein the method further comprises processing information received from the communication element or communication function via the first logical association and the second logical association, or processing information received from the communication element or communication function via the logical association considered as the active association and rejecting information received from the communication element or communication function via the logical association considered as the stand-by association.
Aspect 15) The method according to any of aspects 10 to 14, further comprising determining whether a communication connection using one of the first and second logical associations becomes unavailable, and in case the determination is affirmative, using the communication connection using the other of the first and second logical associations as the active association.
Aspect 16) The method according to aspect 15, further comprising determining whether the communication connection determined to be unavailable becomes available again, and in case the determination is affirmative, using again the communication connection being available again as the active association.
Aspect 17) The method according to any of aspects 10 to 16, further comprising in case the determination whether the communication element or communication function is configured for the stand-by configuration is negative, establishing a logical association between the first IP address of the communication network control element or communication network control function and the IP address of the communication element or communication function, determining whether a communication connection using the logical association becomes unavailable, and in case the determination is affirmative, sending an error code to a serving network node or a serving network function indicating that a restoration procedure for the communication network control element or communication network control function is to be conducted.
Aspect 18) The method according to any of aspects 10 to 17, wherein the communication network control element or communication network control function is deployed in a computer cloud environment across a plurality of sites each having an own IP address, and is configured to operate as a proxy call state control function in an IP multimedia subsystem, wherein parts deployed in different sites are configured to exchange information between each other.
Aspect 19) An apparatus for use by a communication element or communication function configured for a stand-by configuration in which at least two Internet protocol, IP, addresses of a communication network control element or communication network control function are usable for a communication connection with the communication element or communication function, the apparatus comprising at least one processing circuitry, and at least one memory for storing instructions to be executed by the processing circuitry, wherein the at least one memory and the instructions are configured to, with the at least one processing circuitry, cause the apparatus at least: to send a register message to a communication network control element or communication network control function via a communication using a first IP address of the communication network control element or communication network control function, the register message comprising an indication that the communication element or communication function is configured for the stand-by configuration, to receive, from the communication network control element or communication network control function, an indication of a second IP address of the communication network control element or communication network control function, the second IP address being different to the first IP address, to store the second IP address, and to establish a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.
Aspect 20) The apparatus according to aspect 19, wherein the at least one memory and the instructions are further configured to, with the at least one processing circuitry, cause the apparatus at least: to conduct, as part of the stand-by configuration, a security setup procedure by establishing a security association for each of the first and second logical associations, wherein the security associations for the first logical association and the second logical association includes at least one of a fifth setting comprising using the same port numbers for sender ports of the security association for the first logical association and the security association for the second logical association, and using the same port numbers for receiver ports of the security association for the first logical association and the security association for the second logical association, and a sixth setting comprising using different port numbers for sender ports of the security association for the first logical association and the security association for the second logical association, and using different port numbers for receiver ports of the security association for the first logical association and the security association for the second logical association, wherein the security associations for the first logical association and the second logical association further includes to use different security parameter index values for the security association for the first logical association and the security association for the second logical association, and the same encryption parameters and keys for the security association for the first logical association and the security association for the second logical association.
Aspect 21) The apparatus according to aspect 20, wherein the at least one memory and the instructions are further configured to, with the at least one processing circuitry, cause the apparatus at least: to send information regarding at least one of the fifth or sixth setting used for the security associations for the first logical association and the second logical association to the communication network control element or communication network control function; to send information regarding the security parameter index values for the security association for the first logical association and the security association for the second logical association to the communication network control element or communication network control function; and to receive information regarding a setting used for the security associations for the first logical association and the second logical association in the communication network control element or communication network control function.
Aspect 22) The apparatus according to any of aspects 19 to 21, wherein the at least one memory and the instructions are further configured to, with the at least one processing circuitry, cause the apparatus at least: to receive the indication of the second IP address of the communication network control element or communication network control function from the communication network control element or communication network control function in an authentication challenge message or in an authentication confirmation message.
Aspect 23) The apparatus according to any of aspects 19 to 22, wherein the at least one memory and the instructions are further configured to, with the at least one processing circuitry, cause the apparatus at least: to receive or send information from or to the communication network control element or communication network control function by using the first logical association or the second logical association, and to process information received from the communication network control element or communication network control function via the first logical association and the second logical association.
Aspect 24) The apparatus according to any of aspects 19 to 23, wherein the at least one memory and the instructions are further configured to, with the at least one processing circuitry, cause the apparatus at least: to receive or send information from or to the communication network control element or communication network control function by using the logical association considered to be the active logical association, and in case information is received from the communication network control element or communication network control function by using the logical association considered to be the stand-by logical association, to switch the logical association considered so far as being the stand-by logical association to the logical association considered to be the active logical association.
Aspect 25) The apparatus according to any of aspects 19 to 23, wherein the at least one memory and the instructions are further configured to, with the at least one processing circuitry, cause the apparatus at least: to receive or send information from or to the communication network control element or communication network control function by using the logical association considered to be the active logical association, and in case it is determined that a communication using the logical association considered to be the active logical association is not successful, to switch the logical association considered so far as being the stand-by logical association to the logical association considered to be the active logical association and to re-try the communication by using the logical association considered after the switching as being the active logical association.
Aspect 26) The apparatus according to any of aspects 19 to 25, wherein the at least one memory and the instructions are further configured to, with the at least one processing circuitry, cause the apparatus at least: to determine whether a communication connection using one of the first and second logical associations becomes unavailable, and in case the determination is affirmative, to use the communication connection using the other of the first and second logical associations as the active association.
Aspect 27) The apparatus according to aspect 26, wherein the at least one memory and the instructions are further configured to, with the at least one processing circuitry, cause the apparatus at least: to determine whether the communication connection determined to be unavailable becomes available again, and in case the determination is affirmative, to use again the communication connection being available again as the active association.
Aspect 28) The apparatus according to any of aspects 19 to 27, wherein the communication network control element or communication network control function is deployed in a computer cloud environment across a plurality of sites each having an own IP address, and is configured to operate as a proxy call state control function in an IP multimedia subsystem, wherein parts deployed in different sites are configured to exchange information between each other.
Aspect 29) A method for use in a communication element or communication function configured for a stand-by configuration in which at least two Internet protocol, IP, addresses of a communication network control element or communication network control function are usable for a communication connection with the communication element or communication function, the method comprising sending a register message to a communication network control element or communication network control function via a communication using a first IP address of the communication network control element or communication network control function, the register message comprising an indication that the communication element or communication function is configured for the stand-by configuration, receiving, from the communication network control element or communication network control function, an indication of a second IP address of the communication network control element or communication network control function, the second IP address being different to the first IP address, storing the second IP address, and establishing a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.
Aspect 30) The method according to aspect 29, further comprising conducting, as part of the stand-by configuration, a security setup procedure by establishing a security association for each of the first and second logical associations, wherein the security associations for the first logical association and the second logical association includes at least one of a fifth setting comprising using the same port numbers for sender ports of the security association for the first logical association and the security association for the second logical association, and using the same port numbers for receiver ports of the security association for the first logical association and the security association for the second logical association, and a sixth setting comprising using different port numbers for sender ports of the security association for the first logical association and the security association for the second logical association, and using different port numbers for receiver ports of the security association for the first logical association and the security association for the second logical association, wherein the security associations for the first logical association and the second logical association further includes to use different security parameter index values for the security association for the first logical association and the security association for the second logical association, and the same encryption parameters and keys for the security association for the first logical association and the security association for the second logical association.
Aspect 31) The method according to aspect 30, further comprising sending information regarding at least one of the fifth or sixth setting used for the security associations for the first logical association and the second logical association to the communication network control element or communication network control function; sending information regarding the security parameter index values for the security association for the first logical association and the security association for the second logical association to the communication network control element or communication network control function; and receiving information regarding a setting used for the security associations for the first logical association and the second logical association in the communication network control element or communication network control function
Aspect 32) The method according to any of aspects 29 to 31, further comprising receiving the indication of the second IP address of the communication network control element or communication network control function from the communication network control element or communication network control function in an authentication challenge message or in an authentication confirmation message.
Aspect 33) The method according to any of aspects 29 to 32, further comprising receiving or sending information from or to the communication network control element or communication network control function by using the first logical association or the second logical association, and processing information received from the communication network control element or communication network control function via the first logical association and the second logical association.
Aspect 34) The method according to any of aspects 29 to 33, further comprising receiving or send information from or to the communication network control element or communication network control function by using the logical association considered to be the active logical association, and in case information is received from the communication network control element or communication network control function by using the logical association considered to be the stand-by logical association, switching the logical association considered so far as being the stand-by logical association to the logical association considered to be the active logical association.
Aspect 35) The method according to any of aspects 29 to 33, further comprising receiving or sending information from or to the communication network control element or communication network control function by using the logical association considered to be the active logical association, and in case it is determined that a communication using the logical association considered to be the active logical association is not successful, switching the logical association considered so far as being the stand-by logical association to the logical association considered to be the active logical association and re-trying the communication by using the logical association considered after the switching as being the active logical association.
Aspect 36) The method according to any of aspects 29 to 35, further comprising determining whether a communication connection using one of the first and second logical associations becomes unavailable, and in case the determination is affirmative, using the communication connection using the other of the first and second logical associations as the active association.
Aspect 37) The method according to aspect 36, further comprising determining whether the communication connection determined to be unavailable becomes available again, and in case the determination is affirmative, using again the communication connection being available again as the active association.
Aspect 38) The method according to any of aspects 29 to 37, wherein the communication network control element or communication network control function is deployed in a computer cloud environment across a plurality of sites each having an own IP address, and is configured to operate as a proxy call state control function in an IP multimedia subsystem, wherein parts deployed in different sites are configured to exchange information between each other.
Aspect 39) A computer program product for a computer, including software code portions for performing the steps of any of aspects 10 to 18 or aspects 29 to 38, when said product is run on the computer.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, Bluetooth, Infrared, and the like may be used; additionally, embodiments may also apply wired technologies, e.g. IP based access technologies like cable networks or fixed lines.
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, including a computer usable medium having a computer readable program code embodied therein, the computer readable program code adapted to execute a process as described in embodiments, wherein the computer usable medium may be a non-transitory medium.

Although the present disclosure has been described herein before with reference to particular embodiments thereof, the present disclosure is not limited thereto and various modifications can be made thereto.

## Claims

1. An apparatus for use by a communication network control element or communication network control function using at least two Internet Protocol, IP, addresses, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to receive a register message from a communication element or communication function via a communication using a first IP address of the communication network control element or communication network control function,
to process the register message for determining whether the communication element or communication function is configured for a stand-by configuration in which at least two IP addresses of the communication network control element or communication network control function are usable for a communication connection with the communication element or communication function,
in case the determination is affirmative, to send to the communication element or communication function an indication of a second IP address of the communication network control element or communication network control function, the second IP address being different to the first IP address, and
to establish a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

2. The apparatus according to claim 1, wherein the at least one memory and the instructions are further configured to, with the at least one processing circuitry, cause the apparatus at least:
to conduct, as part of the stand-by configuration, a security setup procedure by establishing a security association for each of the first and second logical associations, wherein the security associations for the first logical association and the second logical association includes at least one of
a first setting comprising using the same port numbers for sender ports of the security association for the first logical association and the security association for the second logical association, and using the same port numbers for receiver ports of the security association for the first logical association and the security association for the second logical association,
a second setting comprising using different port numbers for sender ports of the security association for the first logical association and the security association for the second logical association, and using different port numbers for receiver ports of the security association for the first logical association and the security association for the second logical association,
a third setting comprising using the same security parameter index values for the security association for the first logical association and the security association for the second logical association, and
a fourth setting comprising using different security parameter index values for the security association for the first logical association and the security association for the second logical association,
wherein the security associations for the first logical association and the second logical association further includes to use the same encryption parameters and keys for the security association for the first logical association and the security association for the second logical association.

3. The apparatus according to claim 2, wherein the at least one memory and the instructions are further configured to, with the at least one processing circuitry, cause the apparatus at least:
to send information regarding at least one of the first to fourth setting used for the security associations for the first logical association and the second logical association to the communication element or communication function; and
to receive information regarding a setting used for the security associations for the first logical association and the second logical association in the communication element or communication function.

4. The apparatus according to any of claims 1 to 3, wherein the at least one memory and the instructions are further configured to, with the at least one processing circuitry, cause the apparatus at least:
to send the indication of the second IP address of the communication network control element or communication network control function to the communication element or communication function in an authentication challenge message or in an authentication confirmation message.

5. The apparatus according to any of claims 1 to 4, wherein the at least one memory and the instructions are further configured to, with the at least one processing circuitry, cause the apparatus at least:
to receive or send information from or to the communication element or communication function by using the first logical association or the second logical association,
wherein the at least one memory and the instructions are further configured to, with the at least one processing circuitry, cause the apparatus
to process information received from the communication element or communication function via the first logical association and the second logical association, or
to process information received from the communication element or communication function via the logical association considered as the active association and to reject information received from the communication element or communication function via the logical association considered as the stand-by association.

6. The apparatus according to any of claims 1 to 5, wherein the at least one memory and the instructions are further configured to, with the at least one processing circuitry, cause the apparatus at least:
to determine whether a communication connection using one of the first and second logical associations becomes unavailable, and
in case the determination is affirmative, to use the communication connection using the other of the first and second logical associations as the active association.

7. The apparatus according to claim 6, wherein the at least one memory and the instructions are further configured to, with the at least one processing circuitry, cause the apparatus at least:
to determine whether the communication connection determined to be unavailable becomes available again, and
in case the determination is affirmative, to use again the communication connection being available again as the active association.

8. The apparatus according to any of claims 1 to 7, wherein the at least one memory and the instructions are further configured to, with the at least one processing circuitry, cause the apparatus at least:
in case the determination whether the communication element or communication function is configured for the stand-by configuration is negative,
to establish a logical association between the first IP address of the communication network control element or communication network control function and the IP address of the communication element or communication function,
to determine whether a communication connection using the logical association becomes unavailable, and
in case the determination is affirmative, to send an error code to a serving network node or a serving network function indicating that a restoration procedure for the communication network control element or communication network control function is to be conducted.

9. A method for use in a communication network control element or communication network control function using at least two Internet Protocol, IP, addresses, the method comprising
receiving a register message from a communication element or communication function via a communication using a first IP address of the communication network control element or communication network control function,
processing the register message for determining whether the communication element or communication function is configured for a stand-by configuration in which at least two IP addresses of the communication network control element or communication network control function are usable for a communication connection with the communication element or communication function,
in case the determination is affirmative, sending to the communication element or communication function, an indication of a second IP address of the communication network control element or communication network control function, the second IP address being different to the first IP address, and
establishing a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

10. An apparatus for use by a communication element or communication function configured for a stand-by configuration in which at least two Internet protocol, IP, addresses of a communication network control element or communication network control function are usable for a communication connection with the communication element or communication function, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to send a register message to a communication network control element or communication network control function via a communication using a first IP address of the communication network control element or communication network control function, the register message comprising an indication that the communication element or communication function is configured for the stand-by configuration,
to receive, from the communication network control element or communication network control function, an indication of a second IP address of the communication network control element or communication network control function, the second IP address being different to the first IP address,
to store the second IP address, and
to establish a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

11. The apparatus according to claim 10, wherein the at least one memory and the instructions are further configured to, with the at least one processing circuitry, cause the apparatus at least:
to conduct, as part of the stand-by configuration, a security setup procedure by establishing a security association for each of the first and second logical associations, wherein the security associations for the first logical association and the second logical association includes at least one of
a fifth setting comprising using the same port numbers for sender ports of the security association for the first logical association and the security association for the second logical association, and using the same port numbers for receiver ports of the security association for the first logical association and the security association for the second logical association, and
a sixth setting comprising using different port numbers for sender ports of the security association for the first logical association and the security association for the second logical association, and using different port numbers for receiver ports of the security association for the first logical association and the security association for the second logical association,
wherein the security associations for the first logical association and the second logical association further includes to use different security parameter index values for the security association for the first logical association and the security association for the second logical association, and the same encryption parameters and keys for the security association for the first logical association and the security association for the second logical association.

12. The apparatus according to claim 11, wherein the at least one memory and the instructions are further configured to, with the at least one processing circuitry, cause the apparatus at least:
to send information regarding at least one of the fifth or sixth setting used for the security associations for the first logical association and the second logical association to the communication network control element or communication network control function;
to send information regarding the security parameter index values for the security association for the first logical association and the security association for the second logical association to the communication network control element or communication network control function; and
to receive information regarding a setting used for the security associations for the first logical association and the second logical association in the communication network control element or communication network control function.

13. The apparatus according to any of claims 10 to 12, wherein the at least one memory and the instructions are further configured to, with the at least one processing circuitry, cause the apparatus at least:
to receive the indication of the second IP address of the communication network control element or communication network control function from the communication network control element or communication network control function in an authentication challenge message or in an authentication confirmation message.

14. The apparatus according to any of claims 10 to 13, wherein the at least one memory and the instructions are further configured to, with the at least one processing circuitry, cause the apparatus at least:
to receive or send information from or to the communication network control element or communication network control function by using the first logical association or the second logical association, and
to process information received from the communication network control element or communication network control function via the first logical association and the second logical association.

15. The apparatus according to any of claims 10 to 14, wherein the at least one memory and the instructions are further configured to, with the at least one processing circuitry, cause the apparatus at least:
to receive or send information from or to the communication network control element or communication network control function by using the logical association considered to be the active logical association, and
in case information is received from the communication network control element or communication network control function by using the logical association considered to be the stand-by logical association, to switch the logical association considered so far as being the stand-by logical association to the logical association considered to be the active logical association.

16. The apparatus according to any of claims 10 to 15, wherein the at least one memory and the instructions are further configured to, with the at least one processing circuitry, cause the apparatus at least:
to receive or send information from or to the communication network control element or communication network control function by using the logical association considered to be the active logical association, and
in case it is determined that a communication using the logical association considered to be the active logical association is not successful, to switch the logical association considered so far as being the stand-by logical association to the logical association considered to be the active logical association and
to re-try the communication by using the logical association considered after the switching as being the active logical association.

17. The apparatus according to any of claims 10 to 16, wherein the at least one memory and the instructions are further configured to, with the at least one processing circuitry, cause the apparatus at least:
to determine whether a communication connection using one of the first and second logical associations becomes unavailable, and
in case the determination is affirmative, to use the communication connection using the other of the first and second logical associations as the active association.

18. A method for use in a communication element or communication function configured for a stand-by configuration in which at least two Internet protocol, IP, addresses of a communication network control element or communication network control function are usable for a communication connection with the communication element or communication function, the method comprising
sending a register message to a communication network control element or communication network control function via a communication using a first IP address of the communication network control element or communication network control function, the register message comprising an indication that the communication element or communication function is configured for the stand-by configuration,
receiving, from the communication network control element or communication network control function, an indication of a second IP address of the communication network control element or communication network control function, the second IP address being different to the first IP address,
storing the second IP address, and
establishing a first logical association between the first IP address of the communication network control element or communication network control function and an IP address of the communication element or communication function and a second logical association between the second IP address of the communication network control element or communication network control function and the IP address of the communication element or communication function, wherein one of the first and second logical associations is considered as an active association and the other of the logical associations is considered as a stand-by association.

19. The method according to claim 18, further comprising
conducting, as part of the stand-by configuration, a security setup procedure by establishing a security association for each of the first and second logical associations, wherein the security associations for the first logical association and the second logical association includes at least one of
a fifth setting comprising using the same port numbers for sender ports of the security association for the first logical association and the security association for the second logical association, and using the same port numbers for receiver ports of the security association for the first logical association and the security association for the second logical association, and
a sixth setting comprising using different port numbers for sender ports of the security association for the first logical association and the security association for the second logical association, and using different port numbers for receiver ports of the security association for the first logical association and the security association for the second logical association,
wherein the security associations for the first logical association and the second logical association further includes to use different security parameter index values for the security association for the first logical association and the security association for the second logical association, and the same encryption parameters and keys for the security association for the first logical association and the security association for the second logical association.

20. A computer program product for a computer, including software code portions for performing the steps of claim 9 or any of claims 18 and 19, when said product is run on the computer.
